# EUROPEAN PATENT APPLICATION

(11) **EP 3 122 054 A1**
(43) Date of publication of application: **25.01.2017**
(21) Application number: 15765890.7
(22) Date of filing: 30.01.2015
(51) Int. Cl.: H04N 21/2343, H04N 21/238, H04N 21/431

(54) **TRANSMISSION SIGNAL PROCESSING APPARATUS AND METHOD, AND RECEPTION SIGNAL PROCESSING APPARATUS**

(30) Priority: 20.03.2014 JP 2014058155; 27.11.2014 JP 2014239978
(71) Applicant: Murakami, Kanji, Kitakyushu-shi, Fukuoka 806-0046 (JP)
(72) Inventor: Murakami, Kanji, Kitakyushu-shi, Fukuoka 806-0046 (JP)
(74) Representative: Awapatent AB
(86) International application number: PCT/JP2015/052714
(87) International publication number: WO 2015/141296

(57) **Abstract**

A transmission signal processing apparatus and a transmission signal processing method of the present embodiment broaden the range of use of a system which can transmit and receive ultra-high-resolution image data, thereby allowing a program to be viewed in various forms.

According to the embodiment, an encoding apparatus encodes each of items of image data captured in the same space by a plurality of cameras provided at different locations. A streaming apparatus changes items of encoded image data into streams, respectively. A resolution setting apparatus determines a resolution of each item of image data within the streams. A stream selection apparatus selects one or more streams from a plurality of streams within a permissible range of a transmission capacity. A stream synthesis apparatus synthesizes a selected stream and a stream which carries a control signal into one stream, and outputs a synthesized stream.

## Description

### Technical Field

Embodiments described herein relate generally to a transmission signal processing apparatus, a transmission signal processing method, a received signal processing apparatus, and a received signal processing method.

### Background Art

A digital television broadcasting system transmits image data comprising 1920 pixels in the horizontal direction and 1080 pixels in the vertical direction. Image data of the above resolution is generally called 2K1K (or merely 2K).

Further, recently, a processing system for image data comprising 3840 pixels in the horizontal direction and 2160 pixels in the vertical direction has also been developed. Image data of the above resolution is generally called 4K2K (or merely 4K).

Furthermore, recently, a processing system for image data comprising 7680 pixels in the horizontal direction and 4320 pixels in the vertical direction has also been developed. Image data of the above resolution is generally called 8K4K (or merely 8K). Also, a processing system for image data called 16K has been developed.

As described above, recently, a processing system which processes ultra-high-resolution image data has been developed, and spreading the use of such a processing system is desired.

### Citation List

### Patent Literature

Patent Literature 1: JP 2791310 B
Patent Literature 2: JP 2014-3491 A

### Summary of Invention

### Technical Problem

Development is advanced to realize broadcasting of a program constituted of ultra-high-resolution image data as described above by a satellite broadcasting system or the like. However, as content of a broadcast program, not all of image data is high-resolution image data. Also, even if broadcasting facilities and a receiver which transmit and receive ultra-high-resolution image data are developed, not all the users wish to view every single broadcast program by ultra-high-resolution image data of, for example, 8K4K.

Hence, embodiments described herein aim to provide a transmission signal processing apparatus, a transmission signal processing method, a received signal processing apparatus, and a received signal processing method which broaden the range of use of a system which can transmit and receive ultra-high-resolution image data, thereby allowing a program to be viewed in various forms. Further, according to another embodiment, a transmission signal processing apparatus, a transmission signal processing method, a received signal processing apparatus, and a received signal processing method which are effective in medical diagnosis are to be provided.

### Means for Solving Problem

According to the present embodiment, there is provided a transmission signal generation apparatus configured to change items of image data acquired by imaging the same object from different angles by a plurality of cameras into streams, thereby creating a plurality of streams, to select an arbitrary stream from among the plurality of streams, to synthesize the selected stream and a stream which carries a control signal into one stream, thereby creating a synthesized stream, and to output the synthesized stream as a transmission signal.

Further, according to another embodiment, there is provided a reception/demodulation device which receives and demodulates a synthesized stream produced by synthesizing a first stream which carries first image data for which a first resolution is set and which is encoded, and a second stream which carries second image data for which the first resolution or a second resolution is set and which is encoded, the first image data and the second image data being items of image data which are acquired by imaging a subject in the same shooting space from different angles; a separation circuit which separates the first stream from the second stream; first and second decoders which decode items of image data of the separated first and second streams, and obtain the first image data and the second image data; a display pattern setting module for outputting the first and second image data to a display such that first and second images produced by the first and second image data are arranged in a display area of the display in a set display pattern; and a system control apparatus which communicates with a portable monitor in order to select the display pattern from a plurality of patterns, receives an operation signal, and controls the display pattern setting module.

### Brief Description of Drawings

FIG. 1 is an illustration showing an example of arrangement of video cameras which relay the space within a concert hall in order to describe an embodiment.
FIG. 2 is an illustration showing a configuration example of broadcasting facilities for processing a picture signal collected by the video cameras of FIG. 1.
FIG. 3A is an illustration for explaining an operation example of a portable monitor operated by an editor who creates a broadcast program in the broadcasting facilities of FIG. 2.
FIG. 3B is an illustration for explaining another operation example of a portable monitor operated by an editor who creates a broadcast program in the broadcasting facilities of FIG. 2.
FIG. 3C is an illustration for explaining yet another operation example of a portable monitor operated by an editor who creates a broadcast program in the broadcasting facilities of FIG. 2.
FIG. 4 is an illustration showing a configuration example of a receiving apparatus (a television receiving apparatus, a set-top box, a record reproduction apparatus, a relay apparatus, etc.) which receives a broadcast signal.
FIG. 5A is an illustration for explaining an operation example of a portable monitor operated by the user for operating the receiving apparatus of FIG. 4.
FIG. 5B is an illustration for explaining another operation example of a portable monitor operated by the user for operating the receiving apparatus of FIG. 4.
FIG. 5C is an illustration for explaining yet another operation example of a portable monitor operated by the user for operating the receiving apparatus of FIG. 4.
FIG. 5D is an illustration for explaining yet another operation example of a portable monitor operated by the user for operating the receiving apparatus of FIG. 4.
FIG. 5E is an illustration for explaining yet another operation example of a portable monitor operated by the user for operating the receiving apparatus of FIG. 4.
FIG. 6A is an illustration for explaining an operation example of a portable monitor operated by the user for operating the receiving apparatus of FIG. 4.
FIG. 6B is an illustration for explaining another operation example of a portable monitor operated by the user for operating the receiving apparatus of FIG. 4.
FIG. 6C is an illustration for explaining yet another operation example of a portable monitor operated by the user for operating the receiving apparatus of FIG. 4.
FIG. 6D is an illustration for explaining yet another operation example of a portable monitor operated by the user for operating the receiving apparatus of FIG. 4.
FIG. 6E is an illustration for explaining yet another operation example of a portable monitor operated by the user for operating the receiving apparatus of FIG. 4.
FIG. 7A is an illustration for explaining an operation example of a portable monitor operated by the user for operating the receiving apparatus of FIG. 4.
FIG. 7B is an illustration for explaining another operation example of a portable monitor operated by the user for operating the receiving apparatus of FIG. 4.
FIG. 7C is an illustration for explaining yet another operation example of a portable monitor operated by the user for operating the receiving apparatus of FIG. 4.
FIG. 8 is an illustration showing a configuration example of a portable monitor.
FIG. 9 is a system block diagram showing the relationship among an image data transmission apparatus 11, an image data receiving apparatus 12, a display 440, and a portable monitor 460.
FIG. 10A is an illustration showing a display example of a screen of the portable monitor 460.
FIG. 10B is an illustration showing another display example of a screen of the portable monitor 460.
FIG. 11A is an illustration for explaining another embodiment.
FIG. 11B is an illustration for explaining yet another embodiment.
FIG. 12A is an illustration for explaining yet another embodiment.
FIG. 12B is an illustration for explaining yet another embodiment.
FIG. 13 is an illustration showing a format example of a stream used in transmitting data from the image data transmission apparatus 11 to the image data receiving apparatus 12.
FIG. 14 is an illustration which schematically shows an image of data construction when items of 2K image data (pixel groups) are formed into 4K image data, and items of 4K image data (pixel groups) are formed into 8K image data (pixel group).
FIG. 15 is an overall schematic diagram of a first optical system regarding an imaging apparatus, which captures an in vivo image, capable of performing simultaneous measurement in a visible range and a near-infrared range.
FIG. 16 is a schematic diagram of wavelength characteristics of light emitted from a tungsten halogen light source.
FIG. 17A is a schematic diagram of a method of chromatic aberration correction which covers a wide range of the entire usable wavelength region.
FIG. 17B is a schematic diagram of a method of chromatic aberration correction which covers a wide range of the entire usable wavelength region, in addition to FIG. 17A.
FIG. 17C is a schematic diagram of a method of chromatic aberration correction which covers a wide range of the entire usable wavelength region, in addition to FIGS. 17A and 17B.
FIG. 18 is a schematic diagram of a structure within a visible light range imaging portion.
FIG. 19 is an overall schematic diagram of a second optical system regarding an imaging apparatus, which captures an in vivo image, capable of performing simultaneous measurement in a visible range and a near-infrared range.
FIG. 20 is a cross-sectional view of an optical path guide taken along line X-X of FIG. 19.
FIG. 21 is a schematic diagram of a near-infrared absorption spectral change of purified water corresponding to temperature variations.
FIG. 22 is a schematic diagram of an intracellular structure at a mid-M phase.
FIG. 23 is a schematic diagram of an absorption peak which is caused by a water molecule layer.
FIG. 24 is a schematic diagram of a first applied embodiment regarding a structure within a near-infrared light range imaging portion.
FIG. 25 shows schematic diagrams of a second embodiment regarding a structure within a near-infrared light range imaging portion.
FIG. 26 is a schematic diagram of an example of creating an in vivo image including specific information.

### Mode for Carrying Out the Invention

In the following, a schematic configuration example of this embodiment will be described.

According to the present embodiment, in a transmitter (also referred to as an image data transmission apparatus), an encoding apparatus encodes each of a plurality of items of image data captured in the same shooting space by a plurality of cameras provided at different locations. A resolution setting apparatus determines the respective resolutions of image data.

A streaming apparatus changes the plurality of items of image data for which the resolutions are set and which are encoded into streams, respectively. A stream selection apparatus selects one or more streams from a plurality of streams which carry the encoded image data within a permissible range of a transmission processing capacity. A stream synthesis apparatus synthesizes a selected stream and a stream which carries a control signal into one stream, and outputs the synthesized stream. A transmission signal generation apparatus outputs the synthesized stream as a transmission signal.

Also, in a receiver (also referred to as an image data receiving apparatus), a reception/demodulation device receives and demodulates a synthesized stream produced by synthesizing a first stream which carries first image data for which a first resolution is set and which is encoded, and a second stream which carries second image data for which the first resolution or a second resolution is set and which is encoded. Here, the first image data and the second image data are items of image data which have been acquired by imaging a subject in the same shooting space from different angles.

A separation circuit separates the first stream from the second stream. First and second decoders decode items of image data of the separated first and second streams, and obtain the first image data and the second image data.

A display pattern setting module outputs the first and second image data to a display such that first and second images produced by the first and second image data are arranged in a display area of the display in a set display pattern. A system control apparatus communicates with a portable monitor in order to select the display pattern from a plurality of patterns, receives an operation signal, and controls the display pattern setting module.

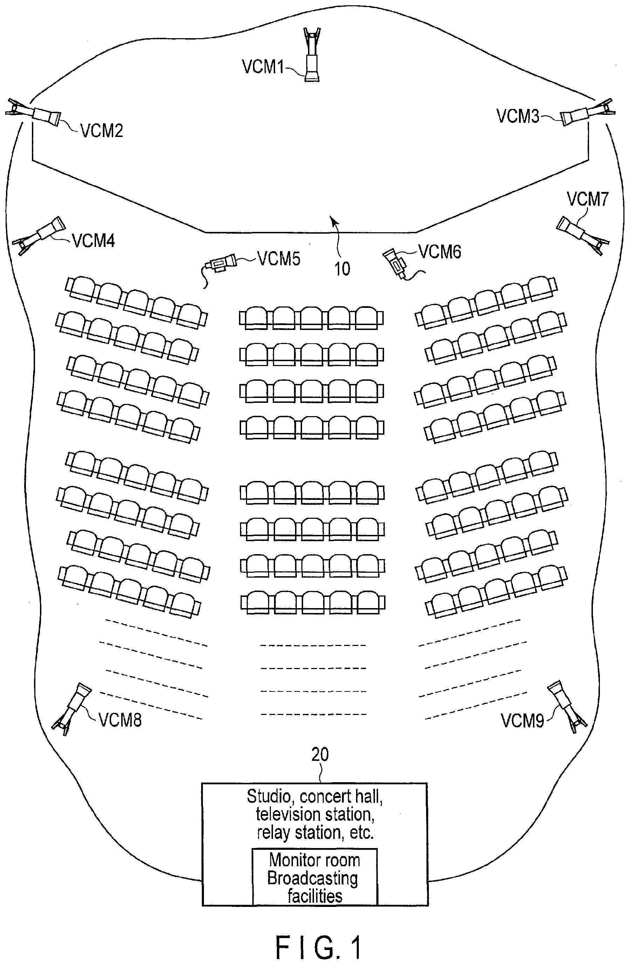

Embodiments will be specifically described with reference to the accompanying drawings. FIG. 1 is an illustration showing an example of arrangement of video cameras VCM1 to VCM9 which relay the interior of a concert hall, for example. Video cameras VCM1 to VCM9 can generate and output 8K image data from imaging signals.

Video cameras VCM5 and VCM6 are carried by cameramen, and can selectively capture a stage 10 or audience seats. The other video cameras are arranged at substantially fixed positions, and cameramen in charge can arbitrary change the shooting direction of their cameras.

In a monitor room (or broadcasting facilities) 20, a program is produced and broadcast signals are generated while monitoring the image pickup state of each of video cameras VCM1 to VCM9.

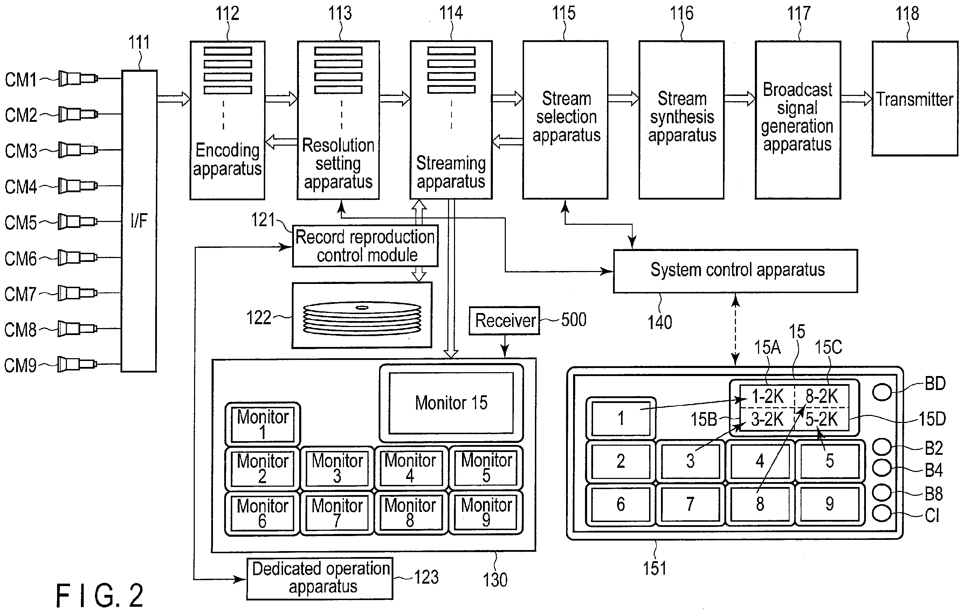

FIG. 2 shows the interior of the monitor room (or broadcasting facilities) 20.

Each item of 8K image data from video cameras VCM1 to VCM9 is input to an encoding apparatus 112 via an interface 111. Note that each item of image data is not limited to 8K data, but may be 4K or 2K image data, or a combination of these types of data.

Each item of image data is encoded in a predetermined format in the encoding apparatus 112. In this case, a resolution setting apparatus 13 is operated together with the encoding apparatus 112. The resolution setting apparatus 113 sets the resolution of the image data. Operation control of the resolution setting apparatus 113 is executed based on a control signal from a system control apparatus 140 which will be described later.

The encoded image data is input to a streaming apparatus 114. The streaming apparatus 114 changes the items of image data into streams in order to carry each item of encoded image data in a pack sequence (also referred to as a packet sequence). This stream also includes a pack of control signals. In this embodiment, nine streams are created.

The nine streams are recorded in a record reproduction apparatus 122 based on control of a record reproduction control module 121. The record reproduction control module 121 can control start of recording, start of reproduction, and the like, by a dedicated operation apparatus 123. All of the (nine) streams can be recorded in the record reproduction apparatus 122 at the highest resolution. Alternatively, as the stream to be recorded in the record reproduction apparatus 122, all of the (nine) streams for which the resolution has been set manually can be recorded.

Image data which is carried to the outside by means of a stream is adjusted to an arbitrary resolution from 8K by the resolution setting apparatus 113. First, images of the respective streams are monitored by an editor by monitors 1 to 9. Monitors 1 to 9 are arranged on a monitor arrangement shelf 130.

With respect to all of the (nine) streams transmitted for display on monitors 1 to 9, images corresponding to the image data of the highest resolution may be displayed. Alternatively, with respect to each of the (nine) streams transmitted for display on monitors 1 to 9, an image of image data having a resolution corresponding to the setting of the resolution may be displayed when the resolution of the image data is adjusted by the resolution setting which will be described later.

The editor can operate an operation device (also referred to as a portable monitor) 151. The portable monitor 151 can intercommunicate with a system control apparatus 140 by being connected to the system control apparatus 140 via a USB cable, or intercommunicate with the system control apparatus 140 by a short-range wireless communication system.

Here, the portable monitor 151 is an operation device or an operation apparatus capable of making a touch operation input from a display surface. The portable monitor 151 can display icons (also referred to as image blocks or simply blocks) 1 to 9 which designate monitors 1 to 9 arranged on the monitor arrangement shelf 130. Also, an arbitrary icon among icons 1 to 9 can be moved by drag and drop, and be set in a desired area from among areas 15A, 15B, 15C, and 15D within a setting frame 15.

That is, the portable monitor 151 displays the setting frame 15 for determining a transmission stream. The setting frame 15 includes areas 15A, 15B, 15C, and 15D into which the icon is dropped. The editor can select an icon of a monitor image captured from a desired shooting angle for transmission, and set the selected icon to one of areas 15A, 15B, 15C, and 15D. The editor can refer to monitors 1 to 9 when determining an image captured from a desired shooting angle for transmission.

The setting information instructed from the portable monitor 151 is input to the system control apparatus 140. In this case, the setting information instructed from the portable monitor 151 also includes information for determining the resolution of an image of the selected stream. That is, the editor can select one of resolution selection buttons B2, B4, and B8 displayed on the portable monitor 151, and set the resolution for each of items of stream image data set in areas 15A, 15B, 15C, and 15D. For example, by moving a cursor to areas 15A, 15B, 15C, and 15D, and selecting one of resolution selection buttons B2, B4, and B8, the resolution of the image data of the designated stream can be set.

The system control apparatus 140 can control the resolution setting apparatus 113 and a stream selection apparatus 115 based on the setting information, and the stream selection apparatus 115 outputs a selected stream to a stream synthesis apparatus 116.

In the above apparatus, it is assumed that the editor drags and drops icon 1 to area 15A, for example, selects B2, for example, of the resolution buttons as the next step, and presses a determination button BD. If the above is performed, stream image data displayed on monitor 1 is set to a resolution of 2K and output to the stream synthesis apparatus 116. At this time, as the setting information (also referred to as identification information), data indicating that the image data corresponding to icon 1 (monitor 1) is set to a resolution of 2K is displayed in area 15A (i.e., displaying "1-2K", for example). An example illustrated in FIG. 2 shows that items of image data corresponding to monitors 3, 8, and 5 are set to areas 15B, 15C, and 15D, respectively, at a resolution of 2K for all of them. In the above case, the number of transmission streams is four. If the maximum capacity of a broadcast program signal of a broadcasting system per channel is 8K, the entire image data of the above-described synthesized stream is 8K.

The above setting information (identification information) represents information on the stream selected by the editor (user), a resolution of the image data transmitted by the stream, a monitor number (a camera identification number), etc.

As described above, the editor can set image data captured from a desired angle to be transmitted at a desired resolution while referring to monitors 1 to 9 (the images captured from different angles).

The stream synthesis apparatus 116 synthesizes the streams which should be transmitted, creates a synthesized stream, and adds stream separation information to the synthesized stream so that the receiving side can easily separate the stream corresponding to each angle.

The synthesized stream is converted into a broadcast signal by a broadcast signal generation apparatus 117, and this broadcast signal is supplied to a transmitter 118, and is converted into a broadcast radio wave and output.

Note that reference number 500 denotes a receiver, and is connected to a monitor 15. The receiver 500 and the monitor 15 are used for confirming the image data of the transmitted stream. The receiver will be described in detail later.

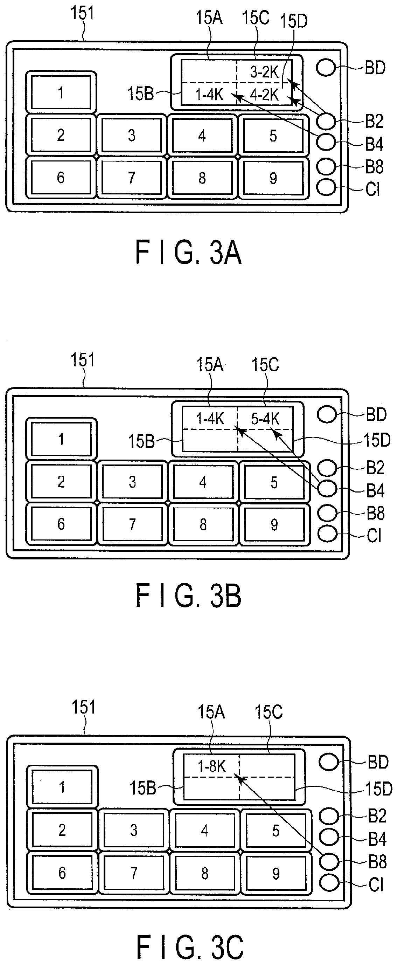

FIGS. 3A to 3C show examples of operation for the editor to set a desired resolution to image data captured from a desired angle. Since the editor uses the portable monitor 151 capable of making touch operation inputs, the editor can easily perform the above setting operation.

An example shown in FIG. 3A indicates that image data corresponding to monitor 1 is set to area 15B at a resolution of 4K. Further, FIG. 3A indicates that image data corresponding to monitor 3 is set to area 15C at a resolution of 2K. Furthermore, FIG. 3A indicates that image data corresponding to monitor 4 is set to area 15D at a resolution of 2K. The number of transmission streams of this case is three.

An example shown in FIG. 3B indicates that image data corresponding to monitor 1 is set to area 15A at a resolution of 4K. Further, FIG. 3B indicates that image data corresponding to monitor 5 is set to area 15C at a resolution of 4K. The number of transmission streams of this case is two.

An example shown in FIG. 3C indicates that image data corresponding to monitor 1 is set to area 15A at a resolution of 8K. The number of transmission streams of this case is one.

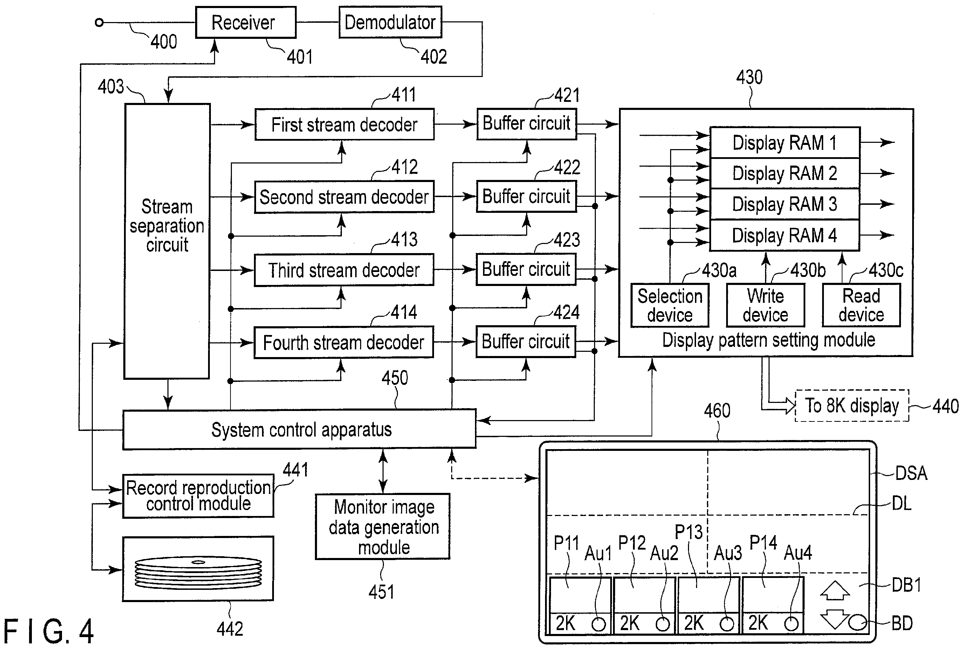

FIG. 4 shows a configuration example of the receiver. A broadcast wave signal is introduced to an input terminal 400 from, for example, a satellite broadcasting antenna or a terrestrial wave antenna. A receiver 401 can select a desired channel from broadcast wave signals, and convert the frequency of a signal of the selected channel based on control from a system control apparatus 450. An intermediate-frequency signal subjected to frequency conversion is input to a demodulator 402. The demodulator 402 performs digital demodulation processing, so that the received signals are converted into a synthesized stream.

The synthesized stream is input to a stream separation circuit 403. The stream separation circuit 403 separates streams by a difference in angles, and supplies the separated streams to first to fourth stream decoders 411 to 415.

In the stream separation circuit 403, items of control information included in the respective streams are separated and input to the system control apparatus 450. In the system control apparatus 450, by analyzing the control information, data such as the number of streams which are transmitted, resolution data on image data carried by each stream, and a timestamp indicative of display timing of the image data can be ascertained. Further, from the control information, the system control apparatus 450 can determine an encoding method of each item of image data, and the like.

As FIGS. 3A to 3C show various numbers of transmission streams, four streams, for example, may be transmitted, and the minimum of one stream may be transmitted. Image data in each stream is decoded by a decoding method corresponding to the encoding method of the transmitted image data.

Items of decoded image data are input to the corresponding buffer circuits 421 to 424, respectively. Buffer circuits 421 to 424 are used for performing delay adjustment, in order to obtain time synchronization of each item of image data.

Items of output image data of buffer circuits 421 to 424 are input to a display pattern setting module 430. The display pattern setting module 430 includes display RAMs 1, 2, 3, and 4. Display RAMs 1 to 4 are associated with buffer circuits 421 to 424 based on selection of a selection device 430a.

The selection device 430a can have the association established such that items of output image data of buffer circuits 421 to 424 are written to display RAMs 1, 2, 3, and 4, respectively, for example. Alternatively, it is possible to associate the buffer circuits and the display RAMs such that the output image data of buffer circuit 421, for example, is written to one of display RAMs 2, 3, and 4. That is, based on the user's operation, the selection device 430a can associate an arbitrary buffer circuit with an arbitrary display RAM. In other words, one buffer circuit may be associated with two display RAMs.

Image data is written to display RAMs 1, 2, 3, and 4 based on a write signal from a write device 430b, and is read from display RAMs 1, 2, 3, and 4 based on a read signal from a read device 430c. Items of image data output from display RAMs 1, 2, 3, and 4 are input to a display 440.

A synthesized stream input to the stream separation circuit 403 is recorded in a storage device 442 based on control of a record reproduction control module 441. The storage device 442 is a hard disk, a semiconductor memory, an optical disk, etc., or a combination these elements.

Each of the streams separated by the stream separation circuit 403 is input to a monitor image data generation module 451 via the system control apparatus 450, and converted into monitor image data.

The monitor image data is input to an operation device (also referred to as an operation apparatus, a portable device or a portable monitor) 460. A touch operation input can be made to the portable monitor 460 likewise smartphones. Further, the portable monitor 460 can intercommunicate with the system control apparatus 450 by being connected to the system control apparatus 450 via a USB cable, or intercommunicate with the system control apparatus 450 by a short-range wireless communication system.

In the portable monitor 460, when a stream selection button is selected from a menu display screen, the screen can be changed to a stream selection screen. In the display screen of the portable monitor 460, a monitor picture is displayed on the lower side, and a display area DSA is set to the upper side, for example. Further, in the display area DSA, a division line DL is displayed. The portable monitor 460 is used for simulating a display form of the display 440.

In the stream selection screen described above, the portable monitor 460 can display monitor pictures P11 to P14 (also referred to as monitor blocks). Monitor pictures P11 to P14 display monitor pictures P11 to P14 from the monitor image data generation module 451.

In the example illustrated, monitor pictures P11 to P14 are displayed, and indicators are shown under the images, respectively. The example of the drawing indicates that the resolution of each of monitor pictures P11 to P14 is 2K. Also, the indicators include audio setting buttons Au1 to Au4. When one of audio setting buttons Au1 to Au4 is touched, and the color, for example, is changed (from white to red), this change represents that audio of the selected monitor picture is output from an audio system.

The example of FIG. 4 indicates that four streams are transmitted as the current reception status as has been described with reference to FIG. 2, and that the image data of each of these streams has the resolution of 2K.

The user can set which area of a plurality of areas segmented by the division line DL an image is to be displayed, and which stream image is to be displayed. This setting operation can also be carried out by a drag-and-drop operation as has been described with reference to FIGS. 2, and 3A to 3D.

Also, as the plurality of areas segmented by the division line DL, various patterns (the so-called division patterns) are possible. The division pattern can be changed variously by operating a pattern selection button DB1.

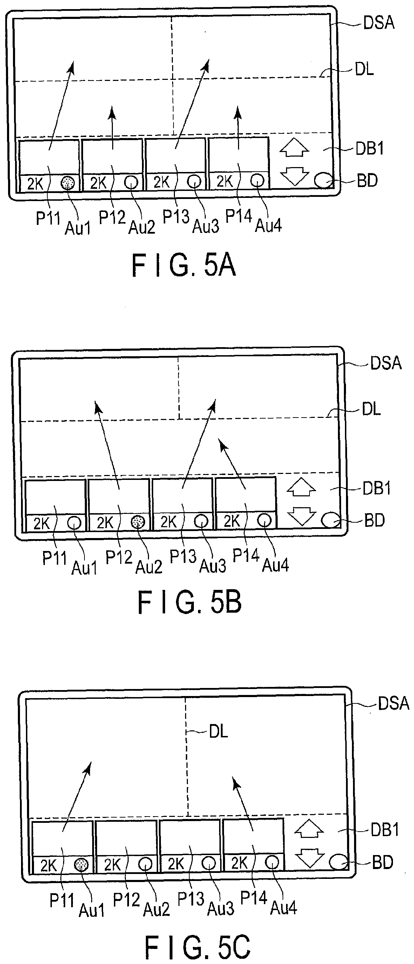

FIGS. 5A to 5E, 6A to 6E, and 7A to 7C show various division patterns. FIG. 5A is an example in which the display area DSA is divided into four areas. FIG. 5A shows an example in which the user can move, for example, monitor picture P11 to an upper left area, monitor picture P12 to a lower left area, monitor picture P13 to an upper right area, and monitor picture P14 to a lower right area, and press a determination button BD. As for audio, the figure shows an example in which audio for image P11 has been selected.

FIG. 5B is an example in which the display area DSA is divided into three areas. FIG. 5B shows an example in which the user can move, for example, monitor picture P12 to an upper left area, monitor picture P13 to an upper right area, and monitor image P14 to a lower area, and press the determination button BD. As for audio, the figure shows an example in which audio for image P12 has been selected.

FIG. 5C is an example in which the display area DSA is divided into two areas. FIG. 5C shows an example in which the user moves, for example, monitor picture P11 to a left area and monitor picture P14 to a right area, and presses the determination button BD. As for audio, the figure shows an example in which audio for image P11 has been selected.

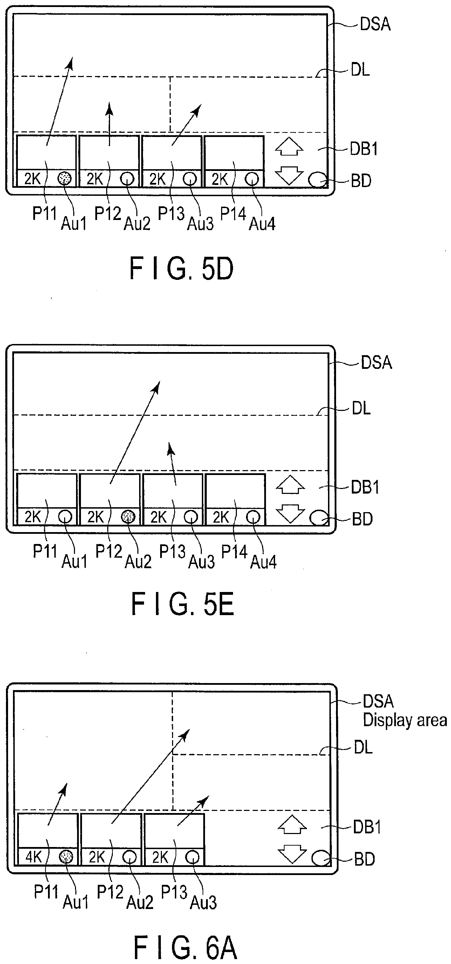

FIG. 5D is an example in which the display area DSA is divided into three areas. FIG. 5D shows an example in which the user can move, for example, monitor picture P11 to an upper area, monitor picture P12 to a lower left area, and monitor picture P13 to a lower right area, and press the determination button BD. As for audio, the figure shows an example in which audio for image P11 has been selected.

FIG. 5E is an example in which the display area DSA is divided into two areas. The figure shows an example in which the user can move, for example, monitor picture P12 to an upper area and monitor picture P13 to a lower area, and press the determination button BD. As for audio, the figure shows an example in which audio for image P12 has been selected.

FIGS. 6A to 6E show examples in which the number of transmitted streams is three, and one of these streams carries 4K image data, and the other two streams carry 2K image data.

FIG. 6A is an example in which the display area is divided into three areas, which are the area on the left side, the upper area on the right side, and the lower area on the right side. Further, FIG. 6A shows an example in which the user can move, for example, monitor picture P11 to the left area, monitor picture P12 to the upper right area, and monitor picture P13 to the lower right area, and press the determination button BD. As for audio, the figure shows an example in which audio for image P11 has been selected.

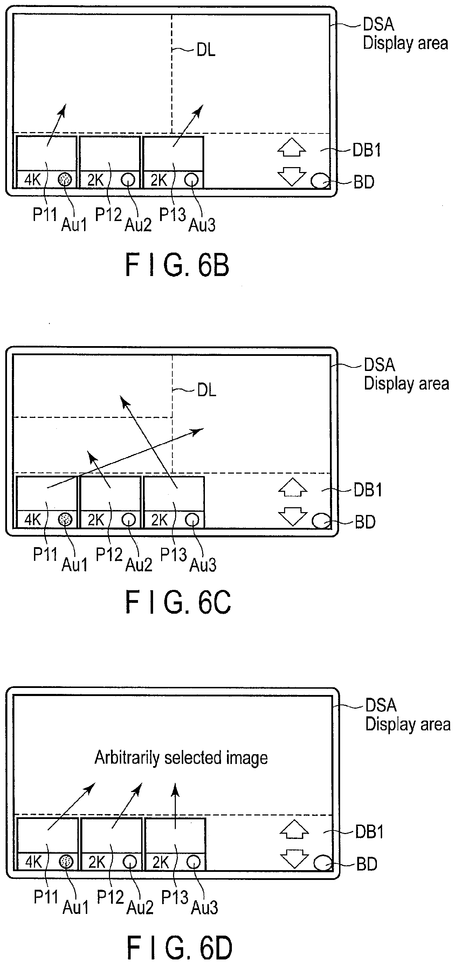

FIG. 6B is an example in which the display area is divided into two areas, which are the area on the left side, and the area on the right side. Further, FIG. 6B shows an example in which the user can move, for example, monitor picture P11 to the left area and monitor picture P13 to the right area, and press the determination button BD. As for audio, the figure shows an example in which audio for image P11 has been selected.

FIG. 6C is an example in which the display area is divided into three areas, which are the upper area on the left side, the lower area on the left side, and the area on the right side. Further, FIG. 6C shows an example in which the user can move, for example, monitor picture P11 to the right area, monitor picture P12 to the upper left area, and monitor picture P13 to the lower left area, and press the determination button BD. As for audio, the figure shows an example in which audio for image P11 has been selected.

FIG. 6D is an example in which the display area is set to one area. Further, FIG. 6D shows an example in which the user can select an arbitrary image from among monitor pictures P11 to P13, for example, move it to the set one area, and press the determination button BD. As for audio, the figure shows an example in which audio for image P11 has been selected.

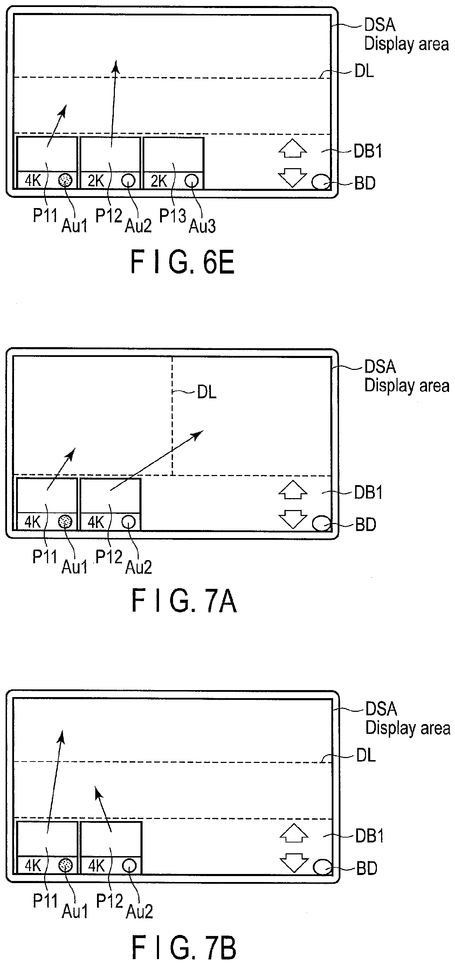

FIG. 6E is an example in which the display area is divided into two areas, i.e., the upper and lower areas. Further, FIG. 6E shows an example in which the user can move, for example, monitor picture P11 to the lower area and monitor picture P12 to the upper area, and press the determination button BD. As for audio, the figure shows an example in which audio for image P11 has been selected.

FIGS. 7A to 7C show examples in which the number of transmitted streams is two, and each of these streams carries 4K image data.

FIG. 7A is an example in which the display area is divided into two areas, which are the area on the left side, and the area on the right side. Further, FIG. 7A shows an example in which the user can move, for example, monitor picture P11 to the left area and monitor picture P12 to the right area, and press the determination button BD. As for audio, the figure shows an example in which audio for image P11 has been selected.

FIG. 7B is an example in which the display area is divided into two areas, which are the upper area and the lower area. Further, FIG. 7B shows an example in which the user can move, for example, monitor picture P11 to the upper area, and monitor picture P12 to the lower area, and press the determination button BD. As for audio, the figure shows an example in which audio for image P11 has been selected.

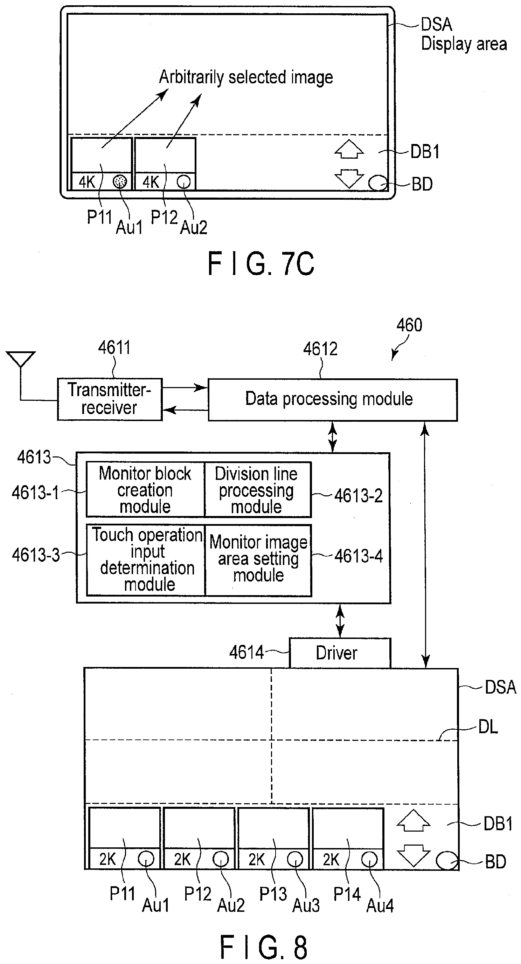

FIG. 7C is an example in which the display area is set to one area. Further, FIG. 7C shows an example in which the user can select an arbitrary image from monitor pictures P11 and P12, for example, move it to the set one area, and press the determination button BD. As for audio, the figure shows an example in which audio for image P11 has been selected.

As described above, in the portable monitor 460, a monitor picture and a simulation picture of the display pattern of the display are displayed. Accordingly, the user can easily select and set a display pattern of the display by using the portable monitor 460. Further, the user can easily recognize which monitor picture is being displayed and the area in which the monitor picture is being displayed, and also at what resolution it is being displayed.

Further, audio determined by button selection as described above means that the audio is to be output to all of the audio apparatuses (speakers) arranged in an audio-visual space. However, needless to say, each of audio parts of pictures of the other angles not output to the audio apparatuses (speakers) can be listened to by earphones.

FIG. 8 shows a configuration example of the portable monitor 460. The portable monitor 460 can intercommunicate with the system control apparatus 450 via a transmitter-receiver 4611. As the operation mode of the portable monitor 460 is switched, Internet connection, telephone connection, etc., can be established. The transmitter-receiver 4611 and a data processing module 4612 can mutually exchange data.

The data processing module 4612 drives a display panel 4615 based on control by a control module 4613. The display panel 4615 integrally comprises a touch operation panel. When an image is displayed on the display panel 4615, image data is supplied to the display panel 4615 from the data processing module 4612, and a driving signal is applied from a driver 4614.

The control module 4613 comprises a monitor block creation module 4613-1, a division line processing module 4613-2, a touch operation input determination module 4613-3, and a monitor image area setting module 4613-4. The monitor block creation module 4613-1 creates monitor pictures P11 to P14 in accordance with the received monitor image data, and supplies it to the display panel 4615.

The division line processing module 4613-2 displays the division line DL, and is capable of displaying various patterns of division lines DL in accordance with the operation of the pattern selection button DB1. This division line can be displayed.

The touch operation input determination module 4613-3 determines a drag operation of a picture (icon), an input operation for setting the division line DL, a determination input operation, etc., in response to an input signal from the touchpanel.

The monitor image area setting module 4613-4 can set a division display area on the display panel 4615 when a division line is decided.

The present invention is not limited to the above embodiment. In the above embodiment, it has been described that streams to be transmitted are selected based on the operation of the portable monitor 151. However, if the streams to be transmitted or the resolutions are changed frequently, the display pattern set by the user in the receiver is disturbed or an image captured from an angle not intended by the user is displayed. Accordingly, preferably, the editor should perform the setting change when a program is switched, or when a relatively long commercial is on air.

The present invention is not limited to the above embodiment. The above embodiment has been described with reference to FIG. 2 as if a synthesized stream is created in real time. However, as has been described, the nine streams are recorded in the record reproduction apparatus 122 based on control of the record reproduction control module 121.

Accordingly, the record reproduction control module 121 can independently control start of recording, start of reproduction, and the like, by the dedicated operation apparatus 123. All of the (nine) streams can be recorded in the record reproduction apparatus 122 at the highest resolution.

Accordingly, at a later date the shooting has been finished, the record reproduction control module 121 and the record reproduction apparatus 122 may be connected to the streaming apparatus 144, and the resolution setting, stream selection, etc., may be carried out. In this case, the editor can operate the dedicated operation apparatus 123, and the portable monitor 151, and synthesize a desired stream. For this reason, the embodiment is not limited to transmission and reception of a broadcast signal, but can be widely applied to transmission and reception of a transmission signal, and to an editing apparatus, etc, as a matter of course.

In the above embodiment, as for video cameras, either a two-dimensional (2D) imaging camera or a three-dimensional (also referred to as a stereoscopic or 3D) imaging camera, or a combination of these cameras may be adopted.

Needless to say, the technology of JP 2791310 B, which relates to the present case, obtained by the present inventor (Murakami) can be applied to the apparatus of the above embodiment.

This technology uniformly controls the imaging environment of a plurality of video cameras. When this technology is used, information (image pickup control information) indicative of the image pickup condition of the designated main 3D video camera is distributed to the other 3D video cameras as distribution image pickup control information. In this way, it is possible to make a position to be targeted (focused) by the other 3D video cameras agree with a position targeted by the main 3D video camera. Consequently, a subject at the target position is imaged from different angles. Further, the invention is devised to prevent a viewer from perceiving an unnatural 3D picture as the 3D picture when an angle is switched by the editor (switcher). For example, when the angle of a 3D subject image is switched from a first angle to a second angle, the viewer feels unnaturalness if perspective is greatly changed. However, according to the above technology, when the image capturing angle of a 3D subject image is switched from the first angle to the second angle, it is devised to prevent the perspective of the 3D picture from being changed as much as possible.

When the above technology is applied to the technology of FIGS. 1 and 2, items of 3D (or 2D) image data captured from more than one angle can be simultaneously transmitted from the transmission apparatus to the receiving apparatus. As a result, in the receiving apparatus, the user can use the portable monitor (or the terminal device) shown in FIG. 8, and arbitrary select and view 3D (or 2D) images captured from a plurality of angles.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

According to a transmission signal processing apparatus and a transmission signal processing method described above, usefulness can be enhanced in various situations. For example, when a figure skater is to be imaged, a whole ice rink and the movement of the skater in the rink are displayed in a large display area, the feet of the skater is displayed in close-up in a small first display area, and the feet of the skater is displayed in close-up in a small second display area.

In the above situation, in even smaller third display area, the facial expressions of a coach or director may be displayed. Further, a plurality of pictures of the feet of the skater captured from different angles may be displayed in a plurality of display areas, respectively.

Moreover, in the above situation, the plurality of display areas may be used as display areas for pictures having 3D parallaxes. That is, one area may be used for displaying a picture for the right eye, and the other area may be used for displaying a picture for the left eye.

Further, according to the transmission signal processing apparatus and the transmission signal processing method described above, in a case where a plurality of transmission signals (a plurality of streams) are selected, editing (selection) operation of those signals is easy. Because of the use of the operation device (portable monitor) 151 having a touch operation function, a drag-and-drop operation enables the editing operation to be carried out easily. Also in the receiving apparatus, by the use of the portable monitor 460 having a touch operation input function, the user can easily operate the apparatus.

Also, the above-described system can be utilized in many sightseeing areas. For example, at a sightseeing area, the system shown in FIGS. 1 and 2 may be arranged for the purpose of capturing an image of the scenery of the sightseeing area. In this way, it is possible to capture pictures of the scenery of the sightseeing area from various angles, and transmit these pictures.

Also, it has been described above that a broadcast signal is transmitted by the transmitter 118. However, in addition to the above configuration, a synthesized stream may be recorded in the portable monitor 460 having a storage medium such as a large-capacity memory, a hard disk drive and/or an optical disk drive. In this case, the receiving apparatus shown in FIG. 4 may comprise a second receiver which receives a synthesized stream from the portable device. Alternatively, the portable monitor 460 and the receiving apparatus may be connected by a USB connecting means, and have the synthesized stream transferred to the storage device 442.

Further, as another embodiment, the record reproduction apparatus 122 (which may include the record reproduction control module 121) in which a number of streams containing captured images (multi-angle image data information) are recorded, as shown in FIG. 2, may be structured such that it is removably provided in an imaging system. In this case, the record reproduction apparatus 122 can be used as the storage device 442 of FIG. 4. In this situation, the receiving apparatus of FIG. 4 may separate the streams, and comprise a plurality of resolution converters.

In the above, an example of transmitting picture signals of a plurality of angles or a single angle such that the picture signals become a transmission signal of 8K as a whole has been described. However, in the above, by improving a transmission capability and/or a transmission method, a signal, etc., having a resolution of 16K or more can be transmitted. Accordingly, the number of cameras, the number of monitors, the number of display areas, and the numerical value of the resolution described above are mere examples, and are not limited to those given above. As the transmission method, a broadcast signal combinatorial scheme, a broadcast channel combinatorial scheme, a combinatorial scheme of broadcast signals and the Internet distribution, etc., may be adopted. Also, as regards the combination of the broadcast channels, the broadcast channel is not limited to one, but a structure in which a plurality of broadcasting stations send the above-described picture signals of different angles may be adopted.

The above system can be applied to various business developments.

For example, an image-capture enterprise which deals with the imaging system shown in FIG. 2 can advertise for sponsors for each video camera. Also, the image-capture enterprise can sell the record reproduction apparatus 122 (which may include the record reproduction control module 121) in which a number of streams (multi-angle image data information) are recorded to a contract sponsor. Further, the user may be allowed to view pictures captured from different angles according to a contract. Furthermore, a mechanism which restricts the number of streams viewable by the user based on the contract may be applied.

In the above embodiment, streams to be transmitted are controlled by the portable monitor 151 at the broadcasting facilities shown in FIG. 2 (i.e., on the image data transmission apparatus side). However, the streams to be transmitted may be selected and controlled by the portable monitor 460 at the receiving apparatus shown in FIG. 4 (i.e., on the image data receiving apparatus side).

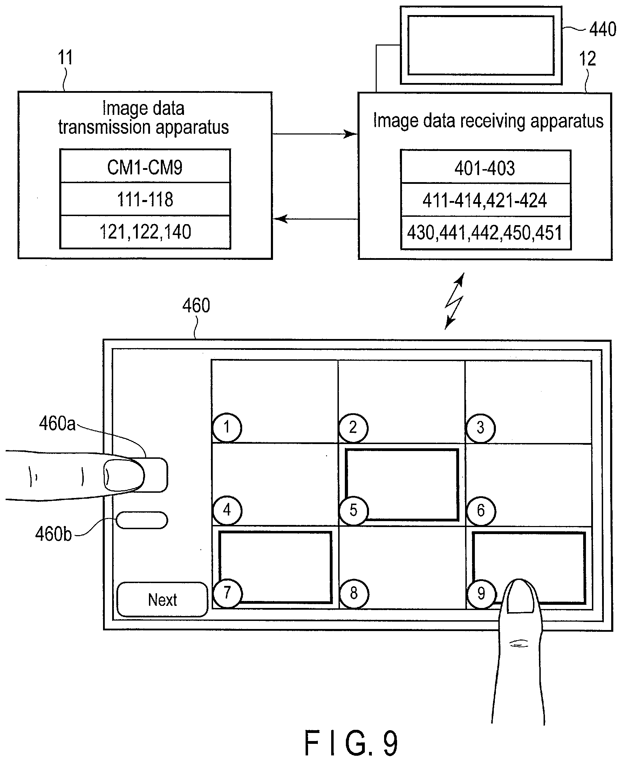

FIG. 9 shows a mutual relationship between an image data transmission apparatus 11, an image data receiving apparatus 12, the display 440, and the portable monitor 460. The blocks included in each of the image data transmission apparatus 11 and the image data receiving apparatus 12 represent elements of the corresponding reference numbers.

In the case of this system, a transmission signal control mode for controlling the image data transmission apparatus 11 can be set to the portable monitor 460. Further, the portable monitor 460 can control the image data transmission apparatus 11 via the image data receiving apparatus 12. In this way, the portable monitor 460 can control the number of streams transmitted by the image data transmission apparatus 11, the resolution, etc.

Various methods are available as a method for transmitting a control signal from the image data receiving apparatus 12 to the image data transmission apparatus 11. For example, a wired method, a wireless method, or a method using the Internet can be used.

FIG. 9 shows an example of a screen of the portable monitor 460. The portable monitor 460 is set to a control mode of controlling the image data transmission apparatus 11. The figure shows the case where the portable monitor 460 specifies the number of streams to be transmitted from the image data transmission apparatus 11 as nine, in accordance with the user's operation. The image data transmission apparatus 11 determines a reduction ratio of the image data acquired from each camera in accordance with a capacity of transmission and the specified number of streams, and transmits these nine streams.

The compressed and encoded image data of nine streams transmitted from the image data transmission apparatus 11 is decoded by the image data receiving apparatus 12, and displayed on the portable monitor 460. The decoded image data may be simultaneously displayed on the display 440.

On the screen of the portable monitor 460, small images numbered 1 to 9 (also referred to as thumbnail images) are displayed. Here, the user can specify an image that he/she is interested in. For example, when an operation button 460a is touched, an image selection mode is enabled. FIG. 9 shows the state where the user's left thumb is in contact with the operation button 460a. Next, the user touches the small image that he/she is interested in to select it. The small image touched by the user is displayed by a frame of a thick line (or another icon, or in the form of blinking of the image). By this frame, the user can recognize that the image is being selected. FIG. 9 shows an example in which small images 5, 7, and 9 are selected. Note that an operation button 460b is a button to be operated when the selection is to be canceled. When a small image for which the selection is to be cancelled is touched while touching the operation button 460b, the selection can be cancelled. Here, the user can operate a next button indicated as "Next".

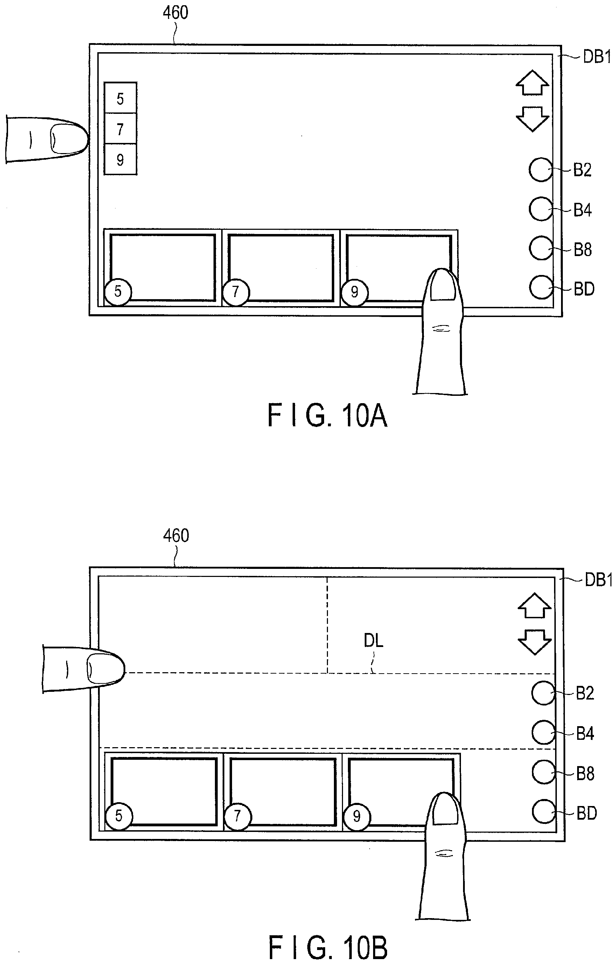

FIG. 10A shows an example of a screen displayed after the next button "Next" is operated. On this screen, a pattern selection button DB1 for determining a division pattern is displayed. Also, resolution selection buttons B2, B4, and B8 for setting the resolution are displayed.

FIG. 10B shows an example in which division lines DL are displayed based on the operation of the pattern selection button DB1.

When the division lines DL are displayed, small images 5, 7, and 9 are arranged at the lower side of the screen of the portable monitor 460, for example. Here, the user can request a resolution for each of the small images 5, 7, and 9. For example, when number 5 displayed on the left side is pressed by the left thumb, and one of B2, B4, and B8 displayed on the right side is operated, it is possible to set one of resolutions 2K, 4K, and 8K to small image 5. It is also possible to set a desired resolution for each of the other small images 7 and 9.

When the user has set the resolution, the specified information is transmitted to the system control apparatus 140 of the image data transmission apparatus 11 based on the control of the system control apparatus 450 of the image data receiving apparatus 12 shown in FIG. 9. The image data transmission apparatus 11 processes items of image data captured by the cameras corresponding to small images 5, 7, and 9, such that they have the specified resolutions, respectively, based on the specified information, converts the respective items of image data into streams, and transmits the streams to the image data receiving apparatus 12. When this is performed, a symbol 2K, 4K, or 8K indicating the resolution set to each of small images 5, 7, and 9 is displayed as shown in FIGS. 5A to 7C.

The user can drag each of small images 5, 7, and 9 shown in FIG. 10B to the desired divided area, as has been described with reference to FIGS. 5A to 7C. As a result, the screen of the display 440 is displayed in the same way as the screen of the portable monitor 460 is displayed.

In the above, it has been described that the portable monitor 460 at the side of the image data receiving apparatus 12 controls the image data transmission apparatus 11 via the image data receiving apparatus 12. However, the control is not limited to the above, and the portable monitor 460 may directly control the image data transmission apparatus 11 via a network, for example.

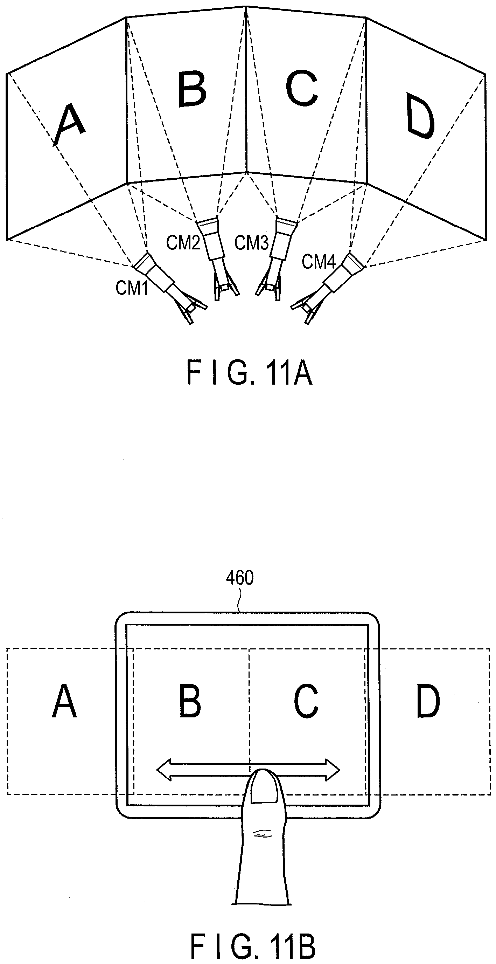

FIGS. 11A and 11B show yet another embodiment. In this embodiment, by means of the portable monitor 460 or 151, images A, B, C, and D captured by cameras CM1, CM2, CM3, and CM4 can be scrolled. This embodiment shows an example in which a subject (the interior of a room), for instance, is imaged by a plurality of cameras CM1, CM2, CM3, and CM4. Items of image data which constitute images A, B, C, and D are transmitted as streams, respectively, from the image data transmission apparatus 11 to the image data receiving apparatus 12.

Screens A, B, C, and D for the four items of image data are processed by the image data receiving apparatus 12 such that they are horizontally continuous. Here, when the image data is displayed in the portable monitor 460 and the display 440, setting is made to make one or two screens to fit in the screens of the portable monitor 460 and a display apparatus 40. By scrolling screens A, B, C, and D, the user can view these four items of image data. The embodiment is an example in which the images captured from four angles can be viewed, but it may also be used as a method of viewing 360-degree images.

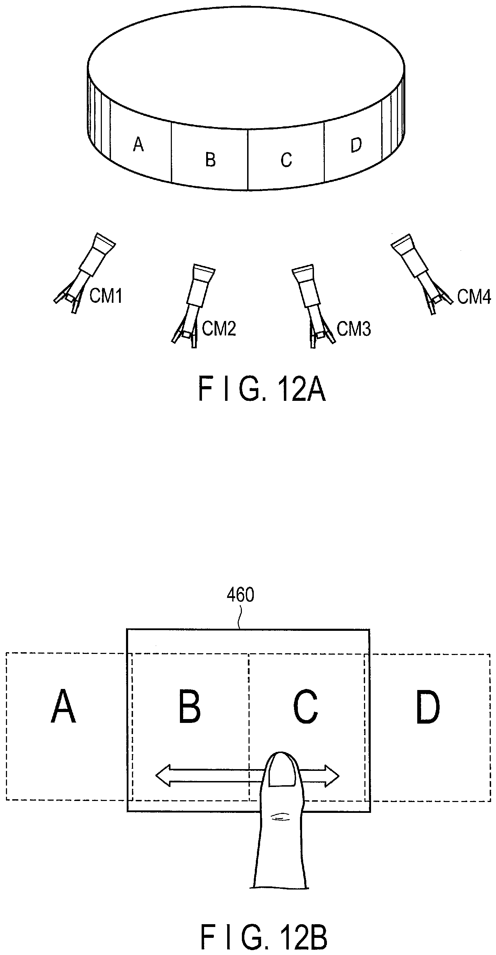

FIGS. 12A and 12B show yet another embodiment.
The basic concept is the same as that of the embodiment described with reference to FIGS. 11A and 11B. This embodiment shows an example in which a subject (the exterior of a house), for instance, is imaged by a plurality of cameras CM1, CM2, CM3, and CM4. Also in this embodiment, by scrolling screens A, B, C, and D, the user can view four items of image data.

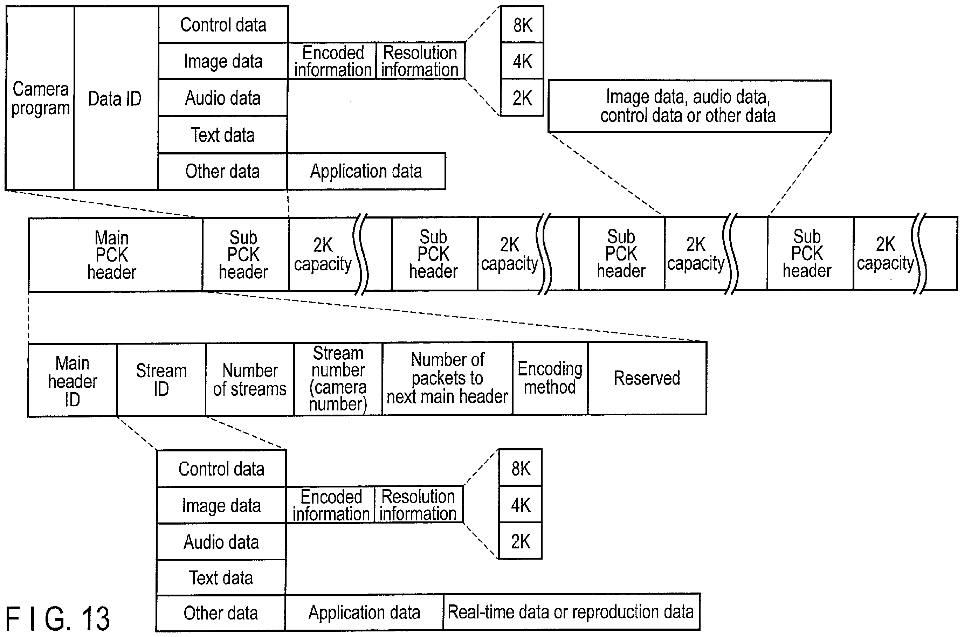

FIG. 13 shows a format example of a stream used in transmitting data from the image data transmission apparatus 11 to the image data receiving apparatus 12.

The stream basically comprises a main pack (MainPCK) header, a sub-packet (SubPCK) header, and a data portion. In this example, the data portion is used as an area for carrying content. One data portion within a packet can accommodate, for example, encoded 2K image data. Two packets can constitute 4K image data. Four packets can constitute 8K image data.

8K image data captured by a camera is separated for each frequency band, and items of image data of the respective bands are encoded and compressed, and accommodated in packets, respectively. The data for each band of the packet is decoded, and when items of decoded image data are synthesized, the 8K image data is reproduced.

In order to realize the above-described reproduction, a camera number (which may also be referred to as an angle number), and a data ID are described in a sub-packet header at the head of the packet. The camera number is the identification number of the camera shown in FIG. 1. The data ID identifies the type of content of the data portion within the sub-packet. The content of the data portion is control data, image data, audio data, text data, and the other data (for example, application data).

Further, when the content is image data, data following the data ID identifying the image data includes information such as image encoding information (indicating the type of encoding method used for encoding), and information indicating which resolution, selected from 2K, 4K, and 8K, is set. Also, the data includes information such as whether the image data is 2D or 3D, and if the image data is 3D, whether it is the right image data or the left image data. Further, the data may include various kinds of identification information such as whether the image data is one which is being broadcast, one which is being reproduced, one which is being observed, or a combination of the aforementioned image data.

Encoded information can indicate that the image data is not encoded (for example, 00 .. 00 is described). The present system may transmit raw data in packets, for example, if requested.

The stream may comprise, for example, a main PCK header. The main PCK header includes data which manages a packet following this header. Further, the main PCK header includes information regarding a packet to at least the next main PCK header. The main PCK header includes areas in which items such as a main header ID, a stream ID, the number of associated streams, a stream number (corresponding to the camera number), the number of packets, an encoding method are described. A reserve area is also included. The stream ID describes which data of control data, image data, audio data, text data, and the other data (for example, application data, real-time data, reproduction data) the stream managed by this main header carries. When the stream ID indicates that the data is real-time data, it means that the stream in question is a stream of a real-time broadcast program, for example. When the stream ID indicates that the data is reproduction data, it means that the stream in question is one when content is reproduced from a storage medium.

Further, when the content is image data, data following the data ID identifying the image data further includes information such as image encoding information (indicating the type of encoding method used for encoding), and information indicating which resolution, selected from 2K, 4K, and 8K, is set. Also, the data includes information such as whether the image data is 2D or 3D, and if the image data is 3D, whether it is the right image data or the left image data. Further, the data may include various kinds of identification information such as whether the image data is one which is being broadcast, one which is being reproduced, one which is being observed, or a combination of the aforementioned image data.

The image data receiving apparatus 12 can interpret the contents of the above packet headers, and decode data of the data portion. Also, a transfer destination of the data of the data portion can be determined.

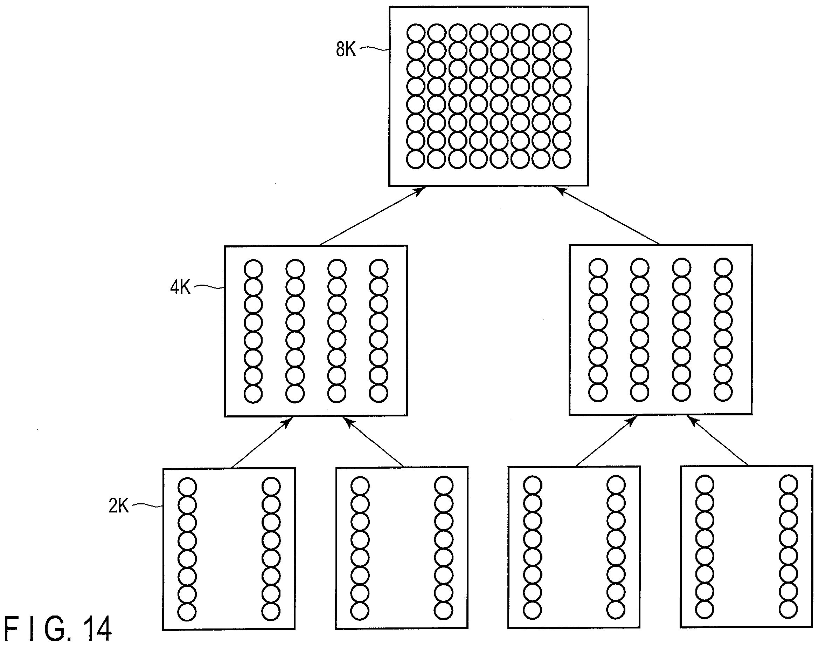

FIG. 14 schematically shows an image of data construction when items of 2K image data (pixel groups) are formed into 4K image data, and items of 4K image data (pixel groups) are formed into 8K image data (pixel group). Circles in FIG. 14 correspond to pixels. In the example of FIG. 14, a method of inserting a row of pixels of a second frame between rows of horizontally-aligned pixels of a first frame, for example, is shown. This method shows a simple example, and is not limited to the above. For example, pixels within a block of the first frame and pixels within a block of the second frame may be computed based on a predetermined calculation formula, and a block having a different number of pixels may be newly created.

In the above embodiment, items of image data captured simultaneously mainly at a program production site of a broadcasting station or a concert hall, etc., have been described. However, application of the present embodiment is not limited to the above. For example, by using an endoscope or a catheter, etc., the inside of a living body may be imaged and items of captured image data may be acquired, and thereafter, a signal process or transmission may be performed for those items of captured image data. As a camera, a miniature camera may be used so that it can be embedded into an endoscope or a laparoscope having a 3D function, for example. For example, the subjects shown in FIGS. 11A and 12A may be the affected part within the body or an organ. Therefore, the image data receiving apparatus 12 can be used by a doctor who diagnoses the affected part within the body or the organ while observing the portable monitor 460 and the display 440.

There are cases where the doctor or the user wants raw data (image data which does not involve encoding or decoding) as a clear image of the affected part or the organ. In such a case, the doctor or the user can make a request for raw data to the image data transmission apparatus 11 by operating the portable monitor 460.

Even if the image data receiving apparatus 12 is at a remote place, the doctor or the user can observe the affected part or the state of a patient in a clear and realistic way from the image data transmission apparatus 11. Also, the doctor or the user can observe the affected part from a desired angle through the portable monitor 460.

Further, an embodiment when this technology is applied to a medical field will be described below in detail. A method of acquiring items of 3D image data by the imaging from multiple angles has been described by referring to FIGS. 1 and 2. Similarly, in an in vivo imaging apparatus such as an endoscope or a catheter, by inserting a plurality of detection optical systems (or a plurality of objective lenses corresponding to the detection optical systems) which are adjacent to each other so as to enable image capturing from multiple angles into the body, it is possible to acquire 3D image data within the body. Also, by a method which will be described later, acquisition of high-definition (high-resolution) 3D image data is enabled. That is, by arranging two objective lenses which have a relatively small numerical aperture (NA) value and great focal depth inside the body in parallel with each other, an optical path guide for light which passes through each of the objective lenses is arranged individually. In this way, 3D image data which has a relatively low resolution, but is clear in the depth dimension (i.e., a front-to-back dimension) to a great extent can be acquired. Further, separately from the above, by using an objective lens whose focal depth is small but has a relatively large NA value, and an optical path guide corresponding to this objective lens, it is possible to acquire high-definition (high-resolution) 2D image data. By carrying out image processing (image complementary processing) between the 2D image data and the 3D image data, a high-definition (high-resolution) image can be created even if depth dimensions are different.

A method of acquiring items of captured image data in the present embodiment has been described mainly in terms of acquiring items of image data captured from different angles or different positions. However, as the application of the present embodiment or an application example thereof, no limitation is imposed, and items of captured image data may be acquired by the other method. For example, a method of imaging a subject from the same angle and at the same position, and collecting captured image data according to each of a detected wavelength region may be adopted. Alternatively, by analyzing specific captured image data and creating new image data based on a result of the analysis, items of image data may be acquired by combining the image data of the result of analysis and the original captured image before analysis. In this case, the image data representing the result of analysis may be displayed simultaneously with the captured image data before analysis or another captured image data. Also, as the simultaneous display method, the items of image data may be displayed in such a way that they are arranged parallel with each other without overlapping one another within the same screen, or that one of the image data overlaps the other image data partially or entirely. In this case, a part of or the whole image data which overlaps may be displayed as a translucent image, for example.

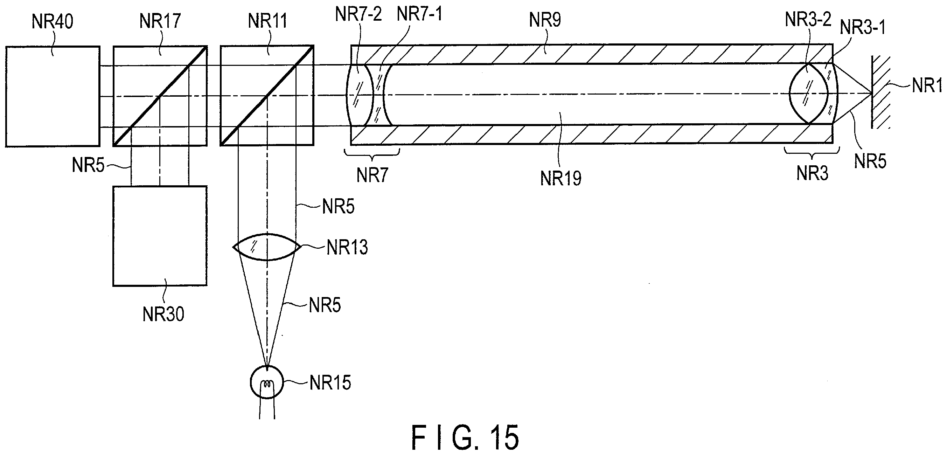

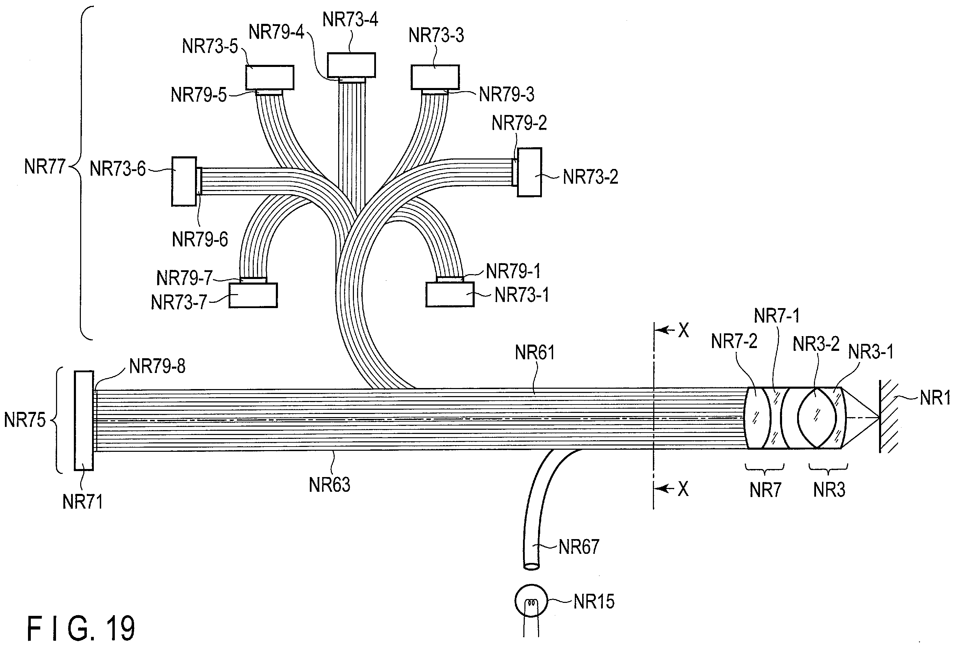

FIGS. 15 and 19 each show an embodiment representing an application example of acquiring items of captured image data by dividing the items of captured image data by their wavelength regions, as a method of acquiring items of captured image data. FIG. 15 shows an applied embodiment in which an optical path guide is covered by a hard tube (an optical path fixing member NR9), for example, and does not deform, and FIG. 19 shows an embodiment in which the optical path guide is deformable.

The feature of the present embodiment is that light beams of not only a wavelength within a visible light range as in the conventional case, but also a wavelength beyond the visible light range are simultaneously irradiated onto the inside of a living body, and that items of captured image data of the visible light range and the wavelength region beyond that range are individually acquired. A wavelength range of light included in the visible light range is approximately from 400 to 700 nm in general. Further, light having a wavelength shorter than 400 nm is called ultraviolet light, and light having a wavelength longer than 700 nm is called infrared light. Although the present embodiment described below corresponds to a case where near-infrared light whose wavelength region is close to the visible light range in the infrared light is used, the present embodiment is not limited to this. That is, an arbitrary combination of light from among ultraviolet light, visible light, near-infrared light, mid-infrared light, far-infrared light, and terahertz light (e.g. a combination of visible light beams whose wavelengths are different from each other but are called by the same name) may be adopted.

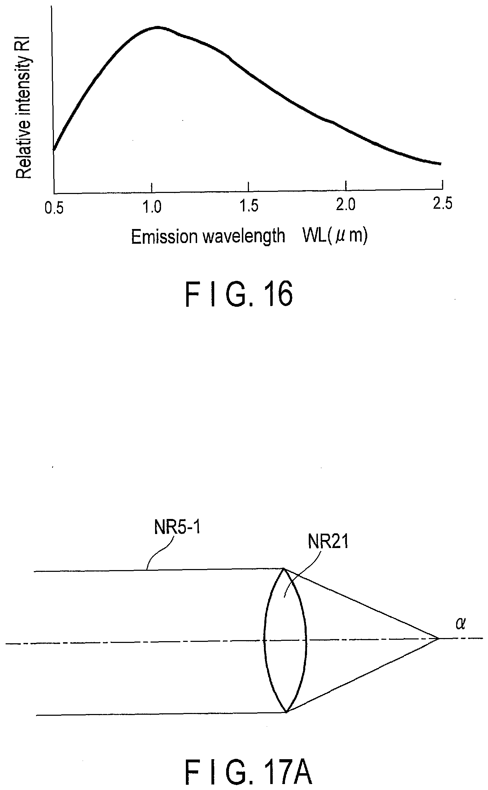

As a light source NR15 used in the embodiments shown in FIGS. 15 and 19, a tungsten halogen lamp light source is used. However, when a combination of visible light and ultraviolet light is used, as a light source, a xenon lamp light source can be used. Here, according to a document written by Iwamoto et al., ("A Guide to Near-infrared Spectroscopy" by Mutsuo Iwamoto et al., published by Saiwai Shobo, 1994, Section 5.1.1), as illustrated in FIG. 16, wavelength characteristics of light radiated from the tungsten halogen lamp light source include visible light whose wavelength is between 400 to 700 nm, and near-infrared light whose wavelength is greater than 700 nm but less than or equal to 2500 nm. Accordingly, by irradiating light (image pickup observation light NR5) radiated from the tungsten halogen lamp light source onto an in vivo observation subject part, items of image data captured in both of a visible light range and a near-infrared range can be simultaneously acquired.

After the image pickup observation light NR5 emitted from the light source NR15 has become substantially parallel light by a condensing lens NR13, the substantially parallel light is reflected by a half mirror NR11, and condenses at an in vivo observation subject part NR1 via a chromatic aberration correction lens NR7 and an objective lens NR3. Although detailed illustration is omitted in FIG. 15, since a light emitting position of the light source NR15 extends in a wide range spatially, in the vicinity of the in vivo observation subject part NR1, the image pickup observation light NR5 is irradiated in a wide range.

Next, after the image pickup observation light NR5 reflected by the in vivo observation subject part NR1 has passed through the objective lens NR3, an optical path of the image pickup observation light NR5 is corrected by the chromatic aberration correction lens NR7. The embodiment shown in FIG. 15 uses the image pickup observation light NR5 which includes a wavelength region of an extremely wide range as shown in FIG. 16. Thus, the embodiment has a great feature in that correction of chromatic aberration which covers the wide range of the entire usable wavelength region is performed.

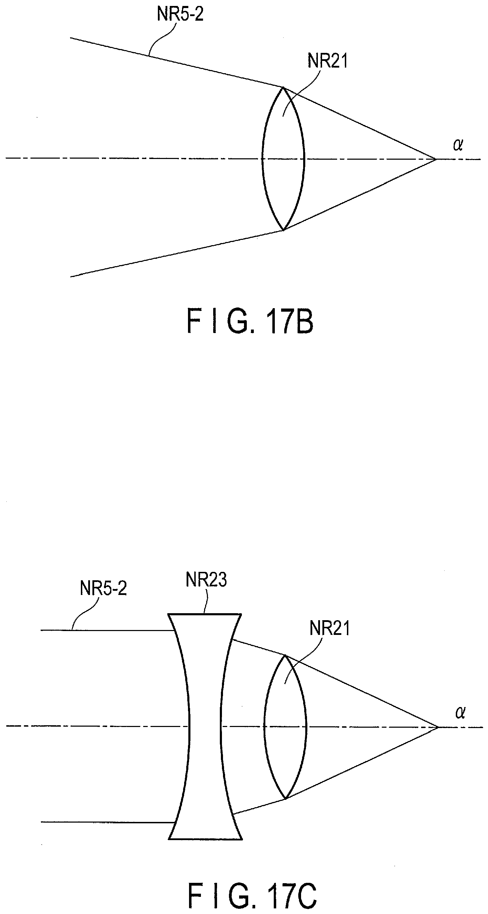

A method of wide area chromatic aberration correction performed in this embodiment will be described with reference to FIGS. 17A to 17C. As shown in FIG. 17A, light NR5-1 having a predetermined wavelength in the image pickup observation light NR5 reflected diffusely at a specific position α within the in vivo observation subject part NR1 becomes parallel light after it has passed through a convex lens NR21. Here, since an optical glass material or a transparent plastic material to be used as a material of the convex lens NR21 generally has a normal dispersion characteristic, the shorter the wavelength of light which passes through the material is, the greater the refractive index becomes. Therefore, if light NR5-2 having a longer wavelength than the predetermined wavelength of light NR5-1 as described above passes through the same convex lens NR21, divergent light is produced as shown in FIG. 17B. A phenomenon in which the optical properties of light are changed depending on the wavelength of passing light as described above is called "chromatic aberration" of the convex lens NR21. As a method of correcting the chromatic aberration, as shown in FIG. 17C, a concave lens NR23 is arranged in the middle of the optical path of the image pickup observation light NR5, as shown in FIG. 17C. As a result, the image pickup observation light NR5 which has passed through the concave lens NR23 becomes parallel light in both cases of the aforementioned light NR5-1 having the predetermined wavelength and light NR5-2 having a longer wavelength than the predetermined wavelength. The objective lens NR3 which can perform chromatic aberration correction based on the above method is configured to have a high-refractive-index glass portion NR3-1 and a low-refractive-index glass portion NR3-2 bonded to each other. In FIG. 15, although the objective lens NR3 serves as a convex lens as a whole, at an interface between the high-refractive-index glass portion NR3-1 and the low-refractive-index glass portion NR3-2, the chromatic aberration correction is performed according to a concave lens characteristic as shown in FIG. 17C.

Meanwhile, when chromatic aberration correction is to be performed in a conventional, relatively narrow wavelength region such as the range of 400 to 700 nm or the range of 1000 to 1500 nm, the objective lens NR3, which is constituted of the high-refractive-index glass portion NR3-1 and the low-refractive-index glass portion NR3-2, alone is sufficient. However, as shown in the present embodiment, when items of image data captured in both the visible light range and the near-infrared range are to be acquired simultaneously, chromatic aberration correction by the above-mentioned objective lens NR3 alone is insufficient. As a method for resolving this problem, the present embodiment has the feature in that the chromatic aberration correction lens NR7 which can perform chromatic aberration correction by itself is arranged in the middle of the optical path of the image pickup observation light NR5, separately from the objective lens NR3 which can perform chromatic aberration correction by itself.

That is, as described above, while the objective lens NR3 has a convex lens characteristic as a whole, the chromatic aberration correction lens NR7 has a concave lens characteristic as a whole. Accordingly, as has been described with reference to FIG. 17C, chromatic aberration correction is performed in a wide wavelength region. Meanwhile, the chromatic aberration correction lens NR7 is configured to have a high-refractive-index glass portion NR7-2 and a low-refractive-index glass portion NR7-1 bonded to each other. Thus, since the chromatic aberration correction lens NR7 has a convex lens characteristic at an interface between the high-refractive-index glass portion NR7-2 and the low-refractive-index glass portion NR7-1, the chromatic aberration correction lens NR7 has chromatic aberration correction properties within a relatively narrow wavelength region.

In the present embodiment described above, chromatic aberration correction for a relatively narrow wavelength region such as the range of 400 to 700 nm or the range of 1000 to 1500 nm is carried out inside the objective lens NR3 alone and inside the chromatic aberration correction lens NR7 alone, and chromatic aberration correction for a relatively wide wavelength region covering both the visible light range and the near-infrared range is carried out by a combination of the objective lens NR3 and the chromatic aberration correction lens NR7.

However, the present embodiment is not limited to the above, and chromatic aberration correction for a relatively wide wavelength region covering both the visible light range and the near-infrared range, for example, may be carried out inside the objective lens NR3 alone and inside the chromatic aberration correction lens NR7 alone by the low-refractive-index glass portions NR7-1 and NR3-2, and the high-refractive-index glass portions NR7-2 and NE3-1. Further, chromatic aberration correction for a relatively narrow wavelength region such as the range of 400 to 700 nm or the range of 1000 to 1500 nm may be carried out by a combination of the objective lens NR3 and the chromatic aberration correction lens NR7. In this way, since chromatic aberration correction is performed for a range extending from the visible light range to the near-infrared range, there is an advantage of being able to simultaneously acquire items of captured image data that are very clear (with a small aberration) in both the visible light range and the near-infrared range. Further, with respect to a problem that the chromatic aberration correction properties are degraded when a position between the objective lens NR3 and the chromatic aberration correction lens NR7 is greatly shifted, the objective lens NR3 and the chromatic aberration correction lens NR7 are fixed by the optical path fixing member NR9 whose interior portion is formed as a hollow portion NR19. Since a misalignment between the objective lens NR3 and the chromatic aberration correction lens NR7 is prevented by this role played by the optical path fixing member NR9, there is an advantage of being able to secure chromatic aberration correction stably for a long term.

The image pickup observation light NR5 which has passed through the chromatic aberration correction lens NR7 described above passes through the half mirror NR11, and then is separated into visible light and near-infrared light by a dichroic mirror NR17. That is, visible light is reflected by the dichroic mirror NR17 and reaches a visible light range imaging portion NR30, and near-infrared light passes through the dichroic mirror NR17 and proceeds to a near-infrared range imaging portion NR40.

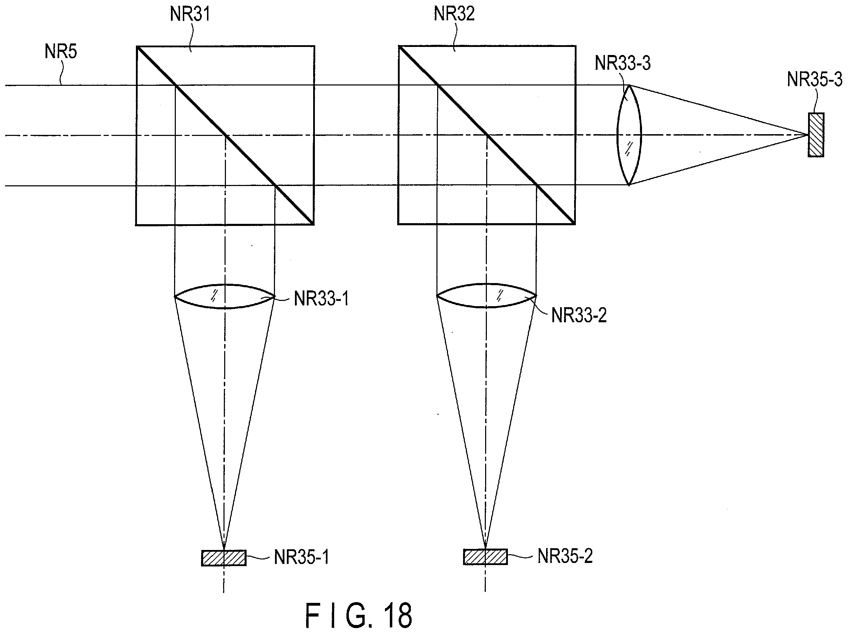

FIG. 18 shows a structure inside the visible light range imaging portion NR30. Visible light extracted by the dichroic mirror NR17 is separated into blue light, green light, and red light, and items of captured image data based on those kinds of light are obtained by imaging surfaces NR35-1 to NR35-3, respectively. That is, of the visible light, blue light is reflected by dichroic mirror NR31 and imaging is performed on imaging surface NR35-1 by an imaging lens NR33-1. Further, although FIG. 18 illustrates as if light is condensed on one point on imaging surface NR35-1 for the sake of simplicity, imaging is performed on imaging surface NR35-1 to be more precise. While green light and red light pass through dichroic mirror NR31, after the green light has been reflected by dichroic mirror NR32, the green light forms an image on imaging surface NR35-2 by the function of imaging lens NR33-2.
Further, red light passes through dichroic mirror NR32, and forms an image on imaging surface NR35-3 by imaging lens NR33-3.

As described above, in the present embodiment, visible light is separated into blue light, green light, and red light, and items of captured image data are acquired individually by separate imaging surfaces NR35-1 to NR35-3. Because of this feature, an in vivo observation subject part can be observed by a color monitor, and the image can be easily seen by a person who performs the operation or a person who makes the diagnosis.

Further, the present embodiment is not limited to the above, and there is also an advantage of being able to easily identify a cancer cell by using the captured image data which can be obtained by blue light.

Referring to FIG. 19, an applied embodiment in which an optical path guide is deformable will be described. Since the optical path guide of the present applied embodiment is deformable, this embodiment can be applied as a catheter or an endoscope for observing the gullet and/or inside the stomach or bowels. In FIG. 15, while the interior of the optical path guide surrounded by the optical path fixing member NR9 corresponds to the hollow portion NR19, in the embodiment shown in FIG. 19, the interior of an optical path guide portion NR63 is constituted of a fiber bundle 61 having flexibility. Meanwhile, while image pickup observation light NR5 emitted from a light source NR15 is guided to an objective lens NR3 through an irradiation light guide fiber NR67 having flexibility, the irradiation light guide fiber NR67 also constitutes a part of the optical path guide portion NR63.

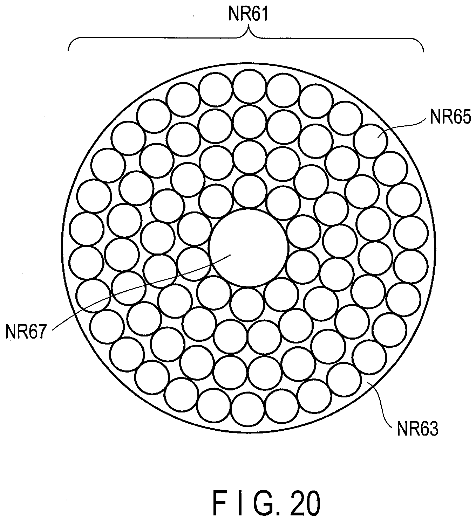

FIG. 20 shows a cross section of the optical path guide portion NR63 taken along line X-X of FIG. 19. The aforementioned irradiation light guide fiber NR67 is arranged at a central portion of the optical path guide portion NR63. Further, around the irradiation light guide fiber NR67, the fiber bundle NR61 formed by collecting respective optical guide fibers NR65, which guide the optical path of the image pickup observation light NR5 reflected by the in vivo observation subject part NR1 and used for captured image data generation, is arranged.

Also, as shown in FIG. 19, the optical guide fibers NR65 diverge in the middle, and each one of the optical guide fibers NR65 proceeds to a visible light detecting portion NR75 or a near-infrared light detecting portion NR77. Further, in the near-infrared light detecting portion NR77, the optical guide fibers NR65 further diverge, and proceed to near-infrared-light-based imaging surfaces NR73-1 to NR73-7.

That is, in the present embodiment described above, the optical guide fibers NR65 diverge in the middle, and proceed to a visible-light-based imaging surface NR71 and near-infrared-light-based imaging surfaces NR73-1 to NR73-7. However, the present embodiment is not limited to the above. Instead of having the respective optical guide fibers NR65 diverged in the middle, the imaging surfaces NR71, and NR73-1 to NR73-7 which are the destination end of the optical guide fibers N65 may be disposed at different locations. Further, as another embodiment, an arrangement in which a part of the optical guide fibers NR65 proceeds to only one of the imaging surface NR71 and NR73-1 to NR73-7, and the rest of the optical guide fibers NR65 diverge in the middle and proceed to the visible-light-based imaging surface NR71 and the near-infrared-light-based imaging surfaces NR73-1 to NR73-7 may be adopted. Here, special optical coating, which allows only the light of a specified wavelength in the image pickup observation light NR5 to be transmitted, is applied to each of optical guide fiber end surfaces NR79-1 to NR79-8 which are in contact with the imaging surfaces NR71 and NR73-1 to NR73-7. (That is, a bandpass color filter in which a wavelength region of transmittable light is extremely narrow is formed.) As a result, the visible-light-based imaging surface NR71 and the near-infrared-light-based imaging surfaces NR73-1 to NR73-7 detect only wavelength region components that are different from each other in the image pickup observation light NR5.

As in the embodiment described with reference to FIGS. 15, and 17 to 17C, also in the embodiment of FIG. 19, chromatic aberration correction is performed in a wide wavelength region extending from the visible light range to the near-infrared light range by a combination of an objective lens NR3 and a chromatic aberration correction lens NR7. Also, aberration correction is not limited to chromatic aberration correction, and various aberrations such as a spherical aberration, a coma aberration, a field curvature, a distortion aberration, and astigmatism, and a higher-order aberration are also corrected by the combination of the objective lens NR3 and the chromatic aberration correction lens NR7. Further, since aberration correction is performed for an image height of a certain degree, a sharpness of an imaged pattern within the image height range is ensured. As a result, amplitude distribution characteristics of the image pickup observation light NR5 at the in vivo observation subject part NR1 and those at a pupil surface at an exit of the chromatic aberration correction lens NR7 have the relationship of Fourier transform with respect to each other. Further, characteristics which are given by a square of an absolute value with respect to an amplitude distribution on the pupil surface at the exit of the chromatic aberration correction lens NR7 are represented as an intensity distribution. The image pickup observation light NR5 is carried to the imaging surfaces NR71 and NR73-1 to NR73-7 by the respective optical guide fibers NR65 while maintaining the light intensity, and quantities of light carried by these optical guide fibers NR65 are detected as items of pixel information of the visible-light-based imaging surface NR71 and the near-infrared-light-based imaging surfaces NR73-1 to NR73-7. Here, photodetector cells constituted of divided elements on a two-dimensional plane, such as in a CCD or a CMOS sensor, are arranged on the visible-light-based imaging surface NR71 and the near-infrared-light-based imaging surfaces NR73-1 to NR73-7, and light intensity information on each pixel as described above is detected by each of the photodetector cells. Accordingly, by performing arithmetic processing of light intensity pattern signals which are obtained by the visible-light-based imaging surface NR71 and the near-infrared-light-based imaging surfaces NR73-1 to NR73-7, a light intensity distribution characteristic for each of a predetermined wavelength on the in vivo observation subject part NR1 can be obtained.

Next, a method of specifically calculating the light intensity distribution for each of the predetermined wavelength (i.e., an arithmetic processing method) will be described below. As described above, a pattern obtained by performing Fourier transform of the amplitude distribution of the image pickup observation light NR5 at the in vivo observation subject part NR1 is represented as the amplitude distribution on the pupil surface at the exit of the chromatic aberration correction lens NR7. Accordingly, when the amplitude distribution on the pupil surface at the exit of the chromatic aberration correction lens NR7 is subjected to inverse Fourier transform, the amplitude distribution of the in vivo observation subject part NR1 can be calculated. Meanwhile, an intensity distribution of the image pickup observation light NR5 which appears on the pupil surface at the exit of the chromatic aberration correction lens NR7 represents an additional value of an intensity distribution component for each wavelength of light included in the image pickup observation light NR5. Accordingly, an intensity distribution pattern for each of a predetermined wavelength component which appears on the pupil surface at the exit of the chromatic aberration correction lens NR7 is projected on each of the visible-light-based imaging surface NR71 and the near-infrared-light-based imaging surfaces NR73-1 to NR73-7. Thus, the square root of data of the intensity distribution pattern which appears on the visible-light-based imaging surface NR71 or the near-infrared-light-based imaging surfaces NR73-1 to NR73-7 is calculated for each pixel (each photodetector cell) to calculate an amplitude distribution, and by squaring an amplitude distribution obtained after performing inverse Fourier transform of the obtained result, a light intensity distribution characteristic for each predetermined wavelength on the in vivo observation subject part NR1 is obtained.

The present embodiment has a great feature in that an abnormal portion at the in vivo observation subject part NR1 is automatically extracted, and display image data of captured image data corresponding to visible light at the in vivo observation subject part NR1 (which can be obtained by the visible light range imaging portion NR30 shown in FIG. 15 or the visible light detecting portion shown in FIG. 19) is partially changed based on the automatically extracted result. Consequently, there is an advantage of enabling a person who performs the operation or a person who makes the diagnosis to easily detect the abnormal portion, which is helpful in performing early treatment.

In an embodiment provided below, as the abnormal portion at the in vivo observation subject part NR1, an early lesion part such as a cancer tissue will be described as an example. However, the abnormal portion is not limited to the above. As the abnormal portion, a portion which is not regarded as a lesion affected part (i.e., which is benign) but whose attributes are slightly different from those of peripheral tissues such as a portion having pigmentation or a portion having benign polyp may be detected. Further, in the present embodiment, a method of predictively extracting (detecting) a cancer tissue as the lesion affected part will be described. However, the present embodiment is not limited to the above, and all kinds of lesion affected part may be predictively extracted (detected).

Also, the present embodiment has the feature in that optical properties specific to the abnormal portion are used as a method of automatically identifying and extracting (detecting) the abnormal portion at the in vivo observation subject part NR1. That is, as the diagnostic characters of a cancer tissue, the following are noted:
(1) Capillary vessels are dense (i.e., a place of vessel regeneration).
(2) A temperature of the part in question is slightly higher than that of the surroundings.
(3) A cell division (mitosis) is performed frequently and actively.

Accordingly, by detecting a local place where the optical properties have changed reflecting the above diagnostic characters, an abnormal portion can be identified and extracted. As a conventional method of identifying a cancer tissue, a method of using an antibody which is combined with a pigment which absorbs light of a specific wavelength is known. In this method, the antibody is fed into a body and is made to adhere to a predetermined cancer tissue by using a antigen-antibody reaction, and the cancer tissue is identified and extracted (detected) by using a change in the color (a place where the light of a predetermined wavelength is absorbed). However, with the above conventional method, a foreign substance, which is the antibody combined with a pigment which absorbs light of a specific wavelength, must be fed into a body. In contrast, since there is no need to feed a foreign substance into a body in the present embodiment, the present embodiment has an advantage that a health condition of a patient can be ensured safely. Further, the present embodiment also has the feature that multiple identification extraction (detection) can be performed simultaneously. Thereby, an advantage of being able to perform even more accurate identification extraction (detection) is brought about.

First, a method of optically detecting the above diagnostic character (1), which is "capillary vessels are dense (i.e., a vessel regenerated place)" will be described. Hemoglobin exists in a red cell. Further, a light absorption characteristic (a wavelength characteristic) of hemoglobin has a great absorption peak in a wavelength region extending from blue light to green light, and has a small absorption peak within a range of the wavelength from 750 to 850 nm. Accordingly, when only the blue light is irradiated onto an area in which the capillary vessels are dense, the blue light is absorbed and appears as a locally dark spot. In particular, when blue light is used for detection, a portion where the capillary vessels are dense existing near the irradiation surface can be predictively extracted. A method of predictively extracting a place where the cancer tissue exists by using this phenomenon will be described. With respect to the image pickup observation light NR5 which has reflected diffusely on the surface of the in vivo observation subject part NR1 of FIG. 15, only the blue light is selectively extracted by the dichroic mirror NR31 and imaging is performed on imaging surface NR35-1, as shown in FIG. 18. Accordingly, in the captured image data detected by imaging surface NR35-1, only a portion where the capillary vessels are dense near the irradiation surface is displayed darkly. When there is a place having subtle irregularities on the surface of the in vivo observation subject part NR1 locally, or a place having a local inclination on the surface of the in vivo observation subject part NR1 by chance, image data captured on imaging surface NR35-2 by extracting only the green light or image data captured on imaging surface NR35-3 by extracting only the red light are also similarly displayed to be dark locally. Accordingly, by comparing captured image data obtained from imaging surface NR35-2 or imaging surface NR35-3 with captured image data of blue light obtained from imaging surface NR35-1 (i.e., by identifying and extracting only a place having a difference between the two types of image data), it becomes possible to more accurately identify and extract a place where the capillary vessels are dense near the irradiation surface (i.e., a potential cancer tissue).

However, when only the above visible light is used, it is difficult to predictively extract a cancer tissue hidden behind a surface on which the image pickup observation light NR5 has reflected diffusely. In order to resolve the above problem, the present embodiment uses a small absorption peak characteristic of hemoglobin which is from 750 to 850 nm. Generally, since a transmissivity of near-infrared light into a living body is relatively high as compared to visible light, it is possible to detect light which has reflected diffusely at a portion deep in the living body (i.e., at the back side). More specifically, by selectively extracting only the near-infrared light within the wavelength range from 750 to 850 nm included in the image pickup observation light NR5 by the near-infrared range imaging portion NR40 of FIG. 15 or the near-infrared light detecting portion NR77 of FIG. 19, captured image data is extracted. Likewise a method described above, by comparing captured image data obtained from near-infrared light within the wavelength range from 750 to 850 nm with captured image data obtained from visible green light or red light (i.e., extracting only a place where the brightness differs in the two types of image data), a place of a potential cancer tissue can be extracted with a higher probability. In this way, by selectively extracting only the near-infrared light within the wavelength range from 750 to 850 nm, and extracting captured image data, it becomes possible to predictively extract a cancer tissue which is hidden behind (at the back side).

That is, in the present embodiment, by acquiring captured image data which is obtained from not only visible light, but also light whose wavelength region is different from that of the visible light, there is a new advantage of being able to identify and extract an abnormal portion such as a cancer tissue (which is hidden at the back or behind) that cannot be identified or extracted by only the visible light.

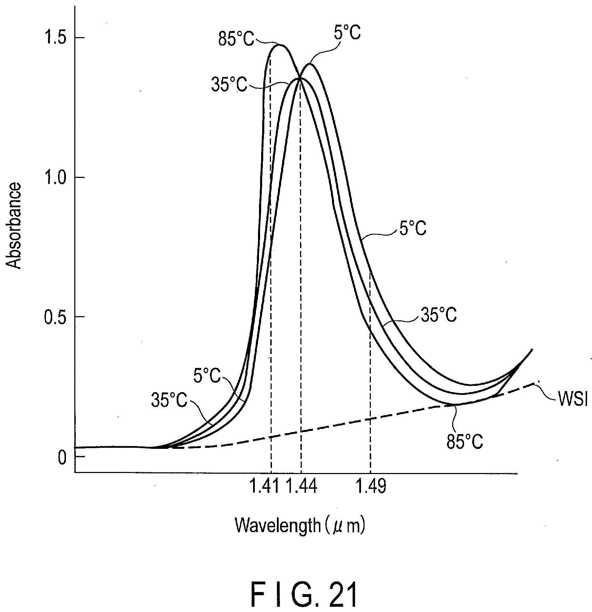

Next, a method of identifying and extracting an abnormal portion such as a cancer tissue by optically detecting the aforementioned diagnostic character (2), which is "a slight temperature raise as compared to the surroundings", will be described. Generally, a light absorption characteristic of water molecules in the near-infrared region changes by susceptibly responding to a temperature, pH, etc. FIG. 21 shows an excerpt from a book on a near-infrared spectrum edited by Ozaki (page 9 of "Near-Infrared Spectroscopy" of Practical Spectroscopy Series I, edited by Yukihiro Ozaki, 1998, IPC), which describes a change in a temperature of near-infrared spectrum of water measured by Maeda et al. (H. Maeda et al.: J. Near Infrared Spectroscopy, Vol. 3 (1995), p.191). In order to make the illustration of FIG. 21 easier to see, only the characteristics of 5°C, 35°C, and 85°C have been cited. However, a continuous characteristic change is acknowledged also in temperatures within the ranges defined by the aforementioned temperatures. Here, the absorbance illustrated in FIG. 21 is defined by a value derived from taking the common logarithm of the ratio of optical intensity before light is transmitted through purified water of a predetermined optical path length to optical intensity after transmittance (where a coefficient of the common logarithm is 1). Further, as the features of a characteristic graph shown in FIG. 21, the following are noted:
- The absorbance at the wavelength of 1.44 µm is kept constant regardless of a temperature change.
- The higher the temperature is, the shorter the wavelength of the absorption peak wavelength is.
- A reduction of absorbance is the greatest at the point of the wavelength of 1.49 µm in a high-temperature environment.
- An increase of absorbance is the greatest at the point of the wavelength of 1.41 µm in a high-temperature environment.

Therefore, by detecting a change of the absorbed amount of light for each of the wavelengths in the near-infrared range of water included in the in vivo observation subject part NR1 (i.e., a change in the absorption spectrum), a temperature distribution in the in vivo observation subject part NR1 can be monitored. Further, by extracting a part where the temperature has increased locally as compared to the peripheral area, it is possible to identify and extract an abnormal portion such as a cancer tissue. Here, as a method of monitoring the temperature in the in vivo observation subject part NR1, the simplest method can be considered as one which extracts only the light near the wavelength of 1.41 µm or 1.49 µm in the image pickup observation light NR5, and measures the absorbance of such light. However, the method is not limited to the above. In the present applied embodiment, narrowband light components which are different from each other included in the image pickup observation light NR5 may be extracted, and arithmetic processing may be performed for each of the detected light quantity to estimate the temperature. Further, as an arithmetic processing method of this case, a difference in a detected light quantity change between a wavelength region in which the absorbance increases in accordance with a temperature raise (for example, near the wavelength of 1.41 µm) and a wavelength region in which the absorbance decreases (for example, near the wavelength of 1.49 µm) may be calculated.

Since a detection signal is computed by difference computation in this case, signals can be obtained stably without being affected by the shape of the surface of the in vivo observation subject part NR1, for example. That is, if the surface of the in vivo observation subject part NR1 has subtle irregularities or the surface is inclined, for example, both of a quantity of light detected with respect to light having the wavelength around 1.41 µm and a quantity of light detected with respect to light having the wavelength around 1.49 µm are simultaneously reduced. Also in this case, by performing difference computation between the two, it is possible to determine whether the temperature within a specific area has increased or decreased with respect to the temperature of the peripheral area.

As described above, by only obtaining a difference in the detected light quantity between two different wavelength regions, and determining whether the obtained difference value is an increased value or a decreased value relative to a value of difference from a peripheral portion, an increase or decrease of temperature with respect to the peripheral area is known. Further, in the case of performing a more accurate temperature measurement, a quantity of light detected in the wavelength region in which the absorbance increases in accordance with the temperature raise (for example, near the wavelength of 1.41 µm) and a quantity of light detected in the wavelength region in which the absorbance decreases (for example, near the wavelength of 1.49 µm) are obtained.

Further, a method of obtaining a difference after normalizing (performing a process of dividing) the above detected light quantities by a quantity of light detected in a wavelength region in which the absorbance does not change regardless of the temperature (for example, near the wavelength of 1.44 µm, for example) is possible.

Alternatively, by measuring the absorbance at a wavelength in the periphery of an absorption band of water shown in FIG. 21, the characteristic of a baseband WS1 is measured in advance. Also, baseband correction (calculation of a difference between a value of raw absorbance and a value of the baseband for each wavelength region) is performed for the absorbance in a wavelength region in which the absorbance increases in accordance with a temperature raise (for example, near the wavelength of 1.41 µm), a wavelength region in which the absorbance decreases (for example, near the wavelength of 1.49 µm), and a wavelength region in which the absorbance does not change (for example, near the wavelength region of 1.44 µm). Further, a method of obtaining a difference after normalizing (performing a process of dividing) a correction value in a wavelength region in which the absorbance increases/decreases in accordance with a temperature raise by a correction value in a wavelength region in which the absorbance does not change, etc., may be employed.

By using these methods, a temperature of a predetermined portion can be measured accurately without being affected by the shape of the surface of the in vivo observation subject part NR1.

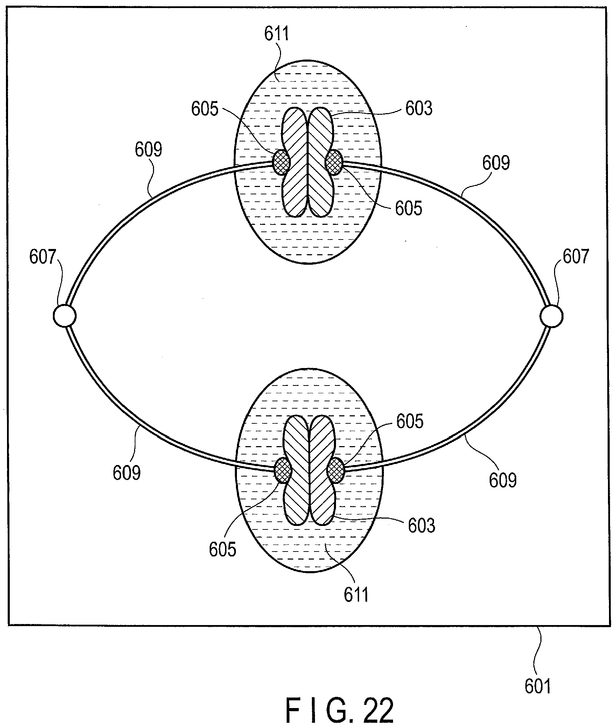

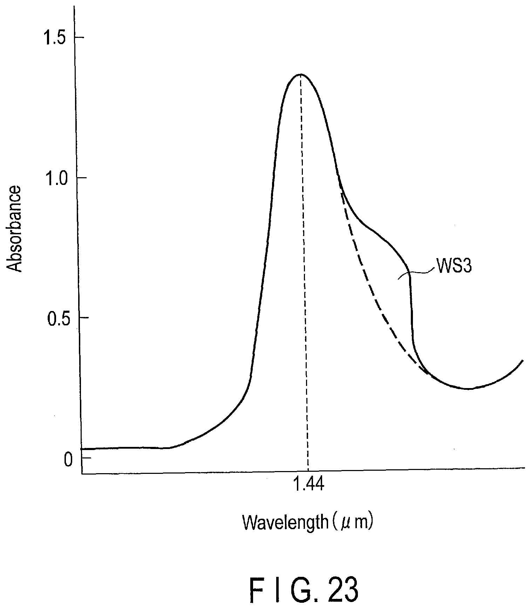

Next, a method of identifying and extracting an abnormal portion such as a cancer tissue by optically detecting the aforementioned diagnostic character (3), which is "active cell division", will be described. FIG. 22 shows the intracellular structure of a single cell in the process of performing cell division (mitosis) (at a mid-M phase). Sister chromatids (replicated chromosomes) 603 are aligned in a cell 601 in the process of cell division (mitosis). Also, at the center of each of the sister chromatids (replicated chromosomes) 603, a centromere 605 exists, and a kinetochore microtubule 609 connects between the centromere 605 and a spindle pole 607. Meanwhile, many phosphate groups having negative charges exist within deoxyribonucleic acid (DNA) which constitutes the respective sister chromatids (replicated chromosomes) 603. Further, since the negative charges of the phosphate group attract the peripheral water molecules, it is expected that multiple layers of water molecule layers 611 overlapping one another as shown in FIG. 22 are formed at the periphery of each of the sister chromatids (replicated chromosomes) 603. In reality, however, it is not always the case that fixed water molecule layers 611 exist as shown in FIG. 22, because the mobility of the water molecules within the cell 601 in the process of the cell division (mitosis) are extremely high. However, it is assumed that the water molecules are arranged around the cell 601 in the process of cell division (mitosis) at a relatively high probability, and the time that the water molecules present a state as if the water molecule layers 611 were formed is long. In this case, the probability of having a hydrogen bond between the water molecules within the water molecule layers 611 becomes high. As a result, an absorption peak WS3 which belongs to the water molecule layer appears as shown in FIG. 23. Accordingly, by detecting the presence or absence of the absorption peak WS3 which belongs to the water molecule layer, it becomes possible to determine whether active cell division (mitosis) is performed at a measurement target position, and identify and extract an abnormal portion such as a cancer tissue.

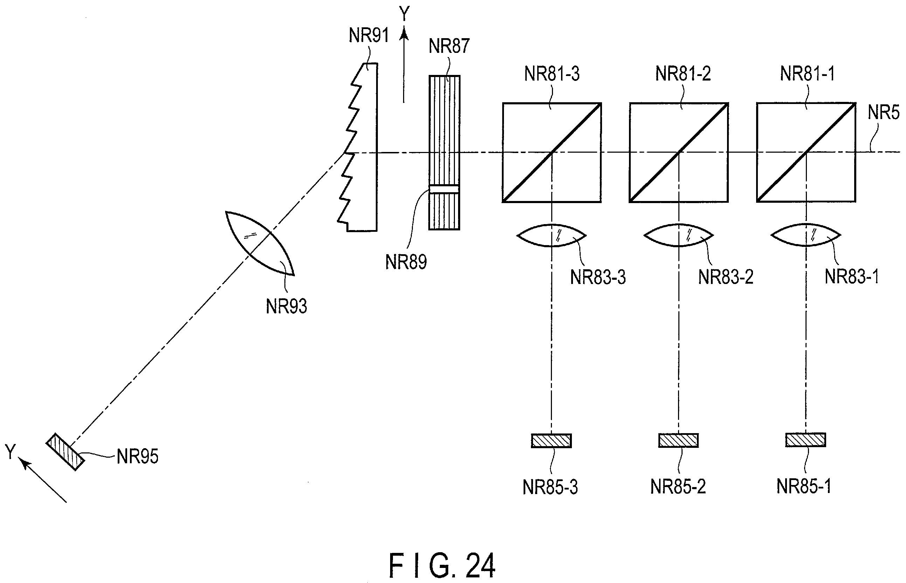

Information which can be obtained by the near-infrared range imaging portion NR40 of FIG. 15 is used in identification and extraction of the abnormal portion such as a cancer tissue. FIG. 24 shows a first embodiment of the internal structure of the near-infrared range imaging portion NR40. Of the near-infrared light extracted by the dichroic mirror NR17 of the image pickup observation light NR5, light whose wavelength is 850 nm or less (in particular, the image pickup observation light NR5 whose wavelength is included within the range of 750 to 850 nm) is reflected and extracted by dichroic mirror NR81-1. Next, beams of light having a longer wavelength and a shorter wavelength than the wavelength of a near-infrared absorption band of purified water shown in FIG. 21 are reflected and extracted by dichroic mirrors NR81-2 and NR81-3, respectively. Further, beams of light reflected by the respective dichroic mirrors NR81-1 to NR81-3 form images on near-infrared light imaging surfaces NR85-1 to NR85-3 via condensing lenses NR83-1 to NR83-3. Here, information obtained by near-infrared light imaging surface NR85-1 is used to predictively extract the aforementioned abnormal portion such as a cancer tissue hidden behind. Also, by the information which can be obtained by near-infrared light imaging surfaces NR85-2 and NR85-3, a characteristic of the aforementioned baseband WS1 is detected. Next, the image pickup observation light NR5, which has passed through all of dichroic mirrors NR81-1 to NR81-3 and has a wavelength within the range of the near-infrared absorption band of pure water, passes through blazed (inclined) grating NR91 after passing through a liquid crystal shutter NR87, and is dispersed. After that, an image is formed on near-infrared light imaging surface NR95 after the image pickup observation light NR5 has passed through condensing lens NR93. Here, in the liquid crystal shutter NR87, a slit portion NR89 through which the light passes as a slit perpendicularly to the plane of the drawing exists. Further, the slit portion NR89 moves in the Y direction as time passes, and the location of a cross-section of the image pickup observation light NR5 which passes through the slit portion NR89 changes. The image pickup observation light NR5 which has passed through the slit portion NR89 is subjected to wavelength division by the blazed grating NR91 (i.e., light which has passed through the blazed grating NR91 changes its traveling direction according to the wavelength). Note that in the present applied embodiment, a surface of the grating N91 is shaped to be slightly inclined, which enhances the diffraction efficiency of primary diffraction light. As a result, since the position of the image pickup observation light NR5 which reaches near-infrared light imaging surface NR95 differs in the Y-direction, a near-infrared absorption spectrum, as shown in FIG. 21 or FIG. 23, in terms of a reached light quantity distribution on near-infrared light imaging surface NR95 in the Y-direction is obtained. Further, likewise the explanation given above, as the light intensity distribution in the Y-direction on near-infrared light imaging surface NR95, a pattern related to a Fourier transform pattern with respect to the in vivo observation subject part NR1 is obtained. Accordingly, after storing an intensity distribution pattern which follows the movement of the slit portion NR89 on the liquid crystal shutter NR87, an image formation pattern of the in vivo observation subject part NR1 can be obtained by the above-described method (inverse Fourier transform technique).

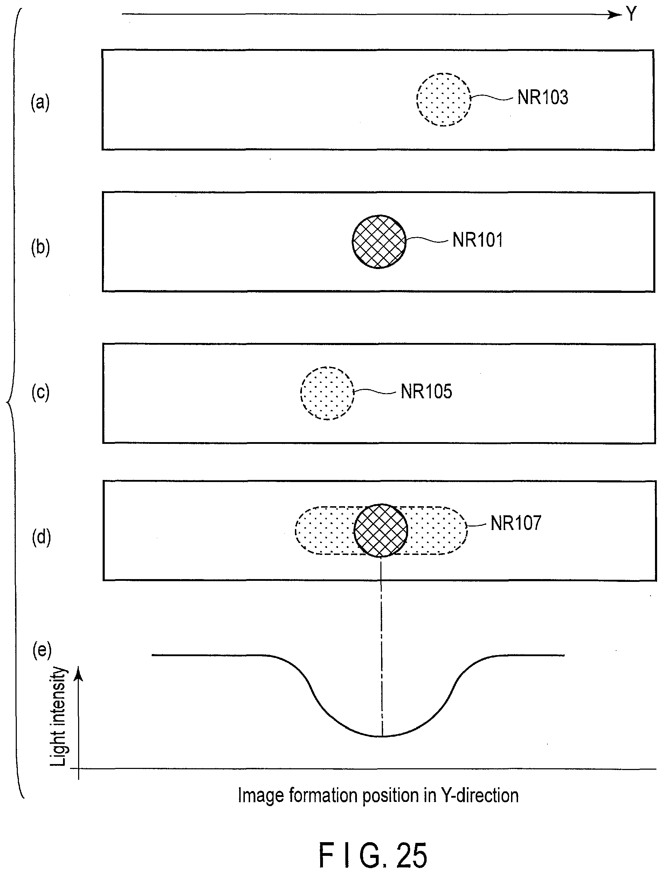

Next, referring to FIG. 25, a second embodiment of a structure within a near-infrared light range imaging portion will be described. The second embodiment has a structure in which the liquid crystal shutter NR87 is deleted from the structure of FIG. 24, although this is not illustrated. As described above, since the image pickup observation light NR5 is subjected to wavelength division by the blazed grating NR91, a pattern in which image formation patterns of the in vivo observation subject part NR1 are shifted in the Y-direction according to the wavelength, and such image formation patterns are superimposed is formed. Here, an image formation pattern NR101 of an abnormal portion which can be obtained by the light of a central wavelength of the absorption peak WS3 belonging to the water molecule layer is the most darkened at an image formation position of the abnormal portion, as shown in FIG. 25(b). In contrast, in image formation patterns NR103 and NR105 of the image pickup observation light NR5 having wavelengths which are deviated from the central wavelength of the absorption peak WS3 belonging to the water molecule layer are not remarkably (greatly) darkened, as shown in FIG. 25(a) and
FIG. 25(c). Therefore, a synthesized pattern NR107 of the light intensity which can be actually obtained on near-infrared light imaging surface NR95 takes the form of a superimposed pattern of FIGS. 25(a) to (c), as shown in FIG. 25(d). Here, FIG. 25(e) represents a distribution of the light intensity shown by
FIG. 25(d). As can be seen from FIG. 25(d), from a position where the light intensity becomes the lowest in the Y direction, the place of an abnormal portion such as a cancer tissue can be determined.

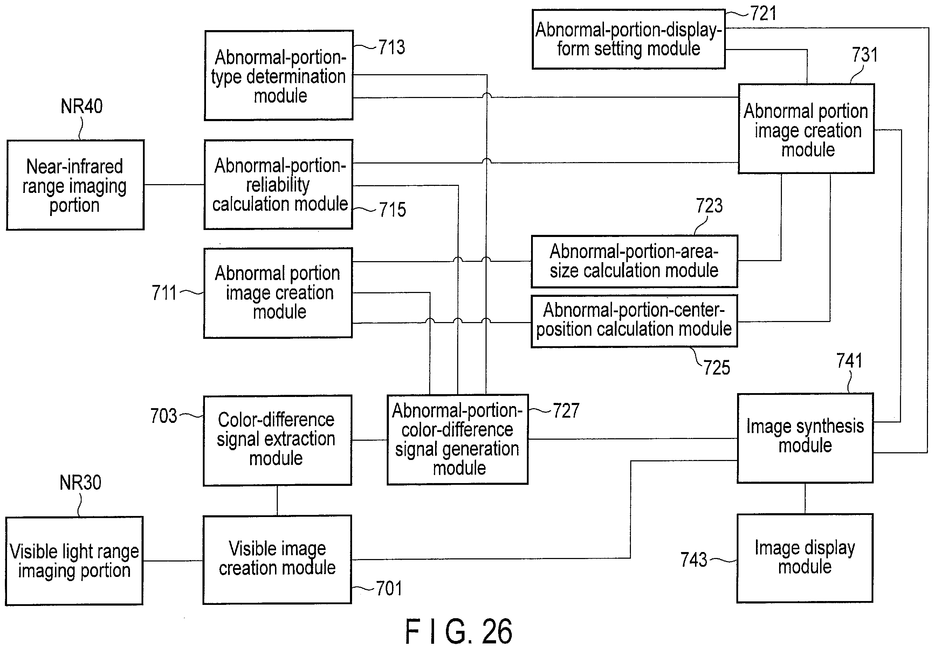

An example of creating an in vivo image including specific information, which corresponds to the present embodiment, will be described with reference to FIG. 26. Image data captured in a visible light region is created by a visible image creation module 701 based on a signal obtained from the visible light range imaging portion NR30 of FIG. 15. Alternatively, instead of the above, the visible image creation module 701 may create image data captured in a visible light region based on a signal which can be obtained by the visible-light-based imaging surface NR71 arranged in the visible light detecting portion NR75 shown in FIG. 19. Further, a color-difference signal extraction module 703 extracts a color-difference signal for each pixel from the image data captured in a visible light region which is obtained by the visible image creation module 701. Captured image data of only the abnormal portion is created by an abnormal portion image creation module 711 by using a signal obtained from the near-infrared range imaging portion NR40, which is illustrated in FIG. 15 and a detailed structure thereof is illustrated in FIG. 24. In addition, together with determining the type of abnormal portion by an abnormal-portion-type determination module 713, the reliability of the abnormal portion is calculated by an abnormal-portion-reliability calculation module 715. Here, determining the type of abnormal portion mentioned above means discriminating between different types of abnormal portions such as whether a portion different from a peripheral tissue is a cancer tissue, a benign tumor, a polyp, or mere pigmentation. For the above determination, integral estimation and judgment is made by using a detection result of part of the visible light (for example, blue light) or part of the near-infrared light. Further, as the judgment criteria of a cancer tissue, the following points are noted:
(1) Capillary vessels are dense (i.e., a place of vessel regeneration).
(2) A temperature of the part in question is slightly higher than that of the surroundings.
(3) A cell division (mitosis) is performed frequently and actively.

Of the above judgment criteria, by checking the number of types which are applicable, the reliability of the abnormal portion is calculated. The way of calculating the reliability is not limited to the above. That is, a weight may be assigned in advance for each of the judgment criteria, and the reliability of the abnormal portion may be calculated by an additional value obtained by adding each of a value multiplied by the weighted value of the corresponding item. Further, as an example, although a method of determining a cancer tissue has been described, the subject of determination is not limited to this. In the present applied embodiment, the reliability of detecting, for example, a benign tumor or a polyp as the abnormal portion may be calculated. Also in this case, several judgment criteria and weighting factors are set in advance likewise the above case. In addition, in the abnormal portion image creation module 711, the abnormal-portion-type determination module 713, and the abnormal-portion-reliability calculation module 715, captured image data which is obtained from each of near-infrared-light-based imaging surfaces NR73-1 to NR73-7 in the near-infrared light detecting portion NR77 as shown in FIG. 19 may be used, instead of using the near-infrared range imaging portion NR40.

The present embodiment has the feature in that as a method of displaying the abnormal portion, the user is allowed to select a method from a method of displaying the abnormal portion by changing the color of only the abnormal portion and a method of displaying the abnormal portion by marking only the abnormal portion. In addition, the present embodiment has the feature in that the user is allowed to select a mark shape (for example, a circle, a star, etc.) in the marking. Also, an abnormal-portion-display-form setting module 721 shown in FIG. 26 is a user interface portion, and user selection is made via this module. As the specific form of the abnormal-portion-display-form setting module 721, a touchpanel, a keyboard, a touch sensor, a voice identification module, or the like may be used. Further, the elements are not limited to the above, and inputs may be made by an external device such as a smartphone or a tablet based on a radio receiver. By flexibly changing the method of displaying the abnormal portion as described above, not only is it possible to perform optimum display according to the situation such as whether the operator is giving a diagnosis or performing an operation, but also is there an advantage of easily drawing the user's attention because the display according to the user's preference can be performed. First, a method of changing the color of the abnormal portion will be described. By the abnormal-portion-display-form setting module 721, a color changing method, such as "changing the color to blue for a cancer tissue" and "changing the color to green if the abnormal portion is a benign polyp", is set in advance. Further, while the color is changed based on a result of determination given by the abnormal-portion-type determination module 713, the degree of change of color is varied in accordance with the reliability calculated by the abnormal-portion-reliability calculation module 715. (For example, when it is 100% confident that the abnormal portion is a cancer tissue, the portion is colored completely blue, and when the reliability is slightly low, the portion is displayed with bluish coloring.) A color after this change of color is calculated by adding a variation color-difference amount corresponding to the reliability calculated on the basis of color-difference signal information obtained from the color-difference signal extraction module 703. Further, a color change process is performed for only a portion of an abnormal image extracted by the abnormal image creation module 711. A series of these processes is carried out in an abnormal-portion-color-difference signal generation module 727. Further, a color-difference signal of the abnormal portion generated in the abnormal-portion-color-difference signal generation module 727 is synthesized with the original captured image data of the visible image creation module 701 within an image synthesis module 741, and a synthesized image is displayed by an image display module 743.

Next, a method of displaying an abnormal portion by marking only the abnormal portion will be described. The user uses the abnormal-portion-display-form setting module 721, and sets a marking method such as "displaying a cancer tissue by a double circle" and "surrounding a benign tumor by a square" in advance. Thereby, a marking shape changes in accordance with a determination result of the abnormal-portion-type determination module 713. Also, in the present applied embodiment, visibility of a mark displayed in accordance with the reliability calculated by the abnormal-portion-reliability calculation module 715 is controlled. More specifically, a mark showing an abnormal portion whose reliability is nearly 100% is displayed by a thick solid line having no transparency (so that an image in a visible light region under a mark line cannot be seen through). However, in this case, the abnormal portion is displayed by a mark surrounding the abnormal portion so that it can be seen clearly. Further, the lower the reliability becomes, the more the transparency is increased (so that the image in the visible light region under the mark line is partially seen through), and the thinner the line becomes which is eventually changed to a broken line. A shape of the mark and the state of the mark line are also set in an abnormal portion image creation module 731. Meanwhile, with respect to an image of only the abnormal portion created by the abnormal portion image creation module 711, it is devised that a size and a center position of the image are calculated by an abnormal-portion-area-size calculation module 723 and an abnormal-portion-center-position calculation module 725, and a mark can be arranged in the form of surrounding the abnormal portion within the image in the visible light region. As described above, since the abnormal portion within the image in the visible light region does not come under the mark line, the user can see a detailed shape of the abnormal portion without being affected by the mark. Further, by also using a result calculated by the abnormal-portion-area-size calculation module 723 and the abnormal-portion-center-position calculation module 725, a shape, a location of arrangement, and a size of the mark indicating the abnormal portion, and a thickness and a form of the line are set by the abnormal portion image creation module 731. The mark indicating the abnormal portion created by the abnormal portion image creation module 731 is synthesized with the image data captured in the visible light region by the image synthesis module 741, and a synthesized image is displayed by the image display module 743.

As specific information which is to be displayed over an image in the visible light region, display of an abnormal portion such as a cancer tissue has been described above. However, the specific information in the present embodiment is not limited to the above. For example, a physical status of a patient such as the pulse, blood pressure, and respiratory condition, a remaining quantity of supplemental blood or a remaining quantity of instillation, readiness of a tool used for surgery (such as a surgical knife and forceps), environmental status such as the current time, and external information such as the situation of people coming in and out of a surgery room, may be displayed. Also, in the above, a method of displaying specific information over an image in the visible light region has been described. However, the present embodiment is not limited to the above, and the other display method may be performed. More specifically, a display area may be divided, for example, and an image in the visible light region may be displayed in one of the divided areas, and the specific information may be displayed in the other area side by side. Further, the image in the visible light region and the specific information may be displayed in such a way that they partially overlap one another.
(1) According to one of the above embodiments, there are provided an encoding apparatus which encodes each of items of captured image data captured in a same shooting space by a plurality of cameras provided at different locations; a resolution setting apparatus which determines respective resolutions of image data; a streaming apparatus which changes items of encoded image data for which the resolutions are set and which are encoded into streams, respectively; a stream selection apparatus which selects one or more streams from a plurality of streams which carry the encoded image data within a permissible range of a transmission processing capacity; a stream synthesis apparatus which synthesizes a selected stream and a stream which carries a control signal into one stream, and outputs a synthesized stream; and a transmission signal generation apparatus which outputs the synthesized stream as a transmission signal.
(2) According to another embodiment, in (1) above, a portable monitor controls the resolution setting apparatus and the stream selection apparatus, selects a stream which should be transmitted, and determines the resolution of the selected stream, and the portable monitor further includes:
   a display logic which displays a first image representing blocks corresponding to monitors which monitor the items of captured image data; and
   another display logic which displays a second image indicating setting information on a block selected from among the blocks, and
   when the selection is executed, the setting information is configured to be displayed as an arbitrary block within the first image is dragged to the second image by a touch operation.
(3) Further, according to yet another embodiment, in (1) above, the synthesized stream includes image data for stereoscopic display.
(4) Furthermore, according to yet another embodiment, there is provided a reception/demodulation device which receives and demodulates a synthesized stream produced by synthesizing a first stream which carries first image data for which a first resolution is set and which is encoded, and a second stream which carries second image data for which the first resolution or a second resolution is set and which is encoded. Here, the first image data and the second image data are items of image data which are acquired by imaging a subject in the same shooting space from different angles. Further, there are provided a separation circuit which separates the first stream from the second stream; first and second decoders which decode items of image data of the separated first and second streams, and obtain the first image data and the second image data; a display pattern setting module for outputting the first and second image data to a display such that first and second images produced by the first and second image data are arranged in a display area of the display in a set display pattern; and a system control apparatus which communicates with a portable monitor in order to select the display pattern from a plurality of patterns, receives an operation signal, and controls the display pattern setting module.
(5) Furthermore, according to yet another embodiment, in (4) above, the portable monitor comprises a display panel comprising a touch input operation panel;
   in the display panel, a plurality of blocks which display images of the first and the second streams are displayed, and a plurality of display areas are set; and
   the display pattern is set as an arbitrary block of the plurality of blocks is dragged to an arbitrary display area of the plurality of display areas by a touch operation.
(6) Furthermore, according to yet another embodiment, in (5) above, the synthesized stream includes image data for stereoscopic display.
(7) Furthermore, in yet another embodiment, a method described below is performed. That is, in a block which forms a transmission apparatus, a method of processing a transmission signal comprises:
   encoding each of items of captured image data captured in the same shooting space by a plurality of cameras provided at different locations;
   determining respective resolutions of image data;
   changing items of encoded image data for which the resolutions are set and which are encoded into streams, respectively;
   selecting one or more streams from a plurality of streams which carry the encoded image data within a permissible range of a transmission processing capacity;
   synthesizing a selected stream and a stream which carries a control signal into one stream, and outputting a synthesized stream; and
   outputting the synthesized stream as a transmission signal.
(8) Further, according to yet another embodiment, there is provided a method in which a portable monitor is used to control a setting apparatus which sets the resolutions and a stream selection apparatus, to select a stream which should be transmitted, and to determine the resolution of the selected stream, and
   in the portable monitor, the method comprises:
   displaying a first image representing blocks corresponding to monitors which monitor the items of captured image data;
   displaying a second image indicating setting information on a block selected from among the blocks; and
   displaying the setting information, when the selection is executed, as an arbitrary block within the first image is dragged to the second image by a touch operation.

### Reference Signs List

CM1-CM9···Video cameras, 111···Interface, 112···Encoding apparatus, 113···Resolution setting apparatus, 114···Streaming apparatus, 115···Stream selection apparatus, 116···Stream synthesis apparatus, 117···Broadcast signal generation apparatus, 118···Transmitter, 121···Record reproduction control module, 122···Record reproduction apparatus, 130···Monitor arrangement shelf, 140···System control apparatus, 151···Portable monitor, 401···Receiver, 402···Demodulator, 403···Stream separation circuit, 411-413···Stream decoders, 421-424···Buffer circuits, 430···Display pattern setting module, 441···Record reproduction control module, 442···Storage device, 450···System control apparatus, 451···Monitor image data generation module, 460···Portable monitor, 601···Cell in the process of cell division (mitosis), 603···Sister chromatid (replicated chromosome), 605···Centromere, 607···Spindle pole, 609···kinetochore microtubule, 611···Water molecule layer, 701···Visible image creation module, 703···Color-difference signal extraction module, 711···Abnormal portion image creation module, 713···Abnormal-portion-type determination module, 715···Abnormal-portion-reliability calculation module, 721···Abnormal-portion-display-form setting module, 723···Abnormal-portion-area-size calculation module, 725···Abnormal-portion-center-position calculation module, 727···Abnormal-portion-color-difference signal generation module, 731···Abnormal portion image creation module, 741···Image synthesis module, 743···Image display module, NR1···In vivo observation subject part, NR3···Objective lens, NR3-1···High-refractive-index glass portion, NR3-2···Low-refractive-index glass portion, NR5···Image pickup observation light, NR5-1···Light having a predetermined wavelength in the image pickup observation light, NR5-2 Light having a longer wavelength than the predetermined wavelength in the image pickup observation light, NR7···Chromatic aberration correction lens, NR7-1···Low-refractive-index glass portion, NR7-2···High-refractive-index glass portion, NR9···Optical path fixing member, NR11···Half mirror, NR13···Condensing lens, NR15···Light source, NR17···Dichroic mirror, NR19···Hollow portion, NR21···Convex lens, NR23···Concave lens, NR30···Visible light range imaging portion, NR31, NR32···Dichroic mirrors, NR33-1 to NR33-3···Imaging lenses, NR35-1 to NR35-3···Imaging surfaces, NR40···Near-infrared range imaging portion, NR61···Fiber bundle, NR63···Optical path guide portion, NR65···Optical guide fibers, NR67···Irradiation light guide fiber, NR71···Visible-light-based imaging surface, NR73-1 to NR73-7···Near-infrared-light-based imaging surfaces, NR75···Visible light detecting portion, NR77···Near-infrared light detecting portion, NR79-1 to NR79-8···Optical guide fiber end surface, NR81-1 to NR81-3···Dichroic mirrors, NR83-1 to NR83-3···Condensing lenses, NR85-1 to NR85-3···Near-infrared light imaging surfaces, NR87···Liquid crystal shutter, NR89···Slit portion, NR91···Blazed grating, NR93···Condensing lens, NR95···Near-infrared light imaging surface, NR101···Abnormal-portion-image-formation-pattern, NR103, NR105···Abnormal-portion-image-formation-patterns, NR107···Synthesized pattern, WS1···Baseband, WS3···Absorption peak which belongs to a water molecule layer

## Claims

1. A transmission signal processing apparatus comprising:
an encoding apparatus which encodes each of items of captured image data captured in a same shooting space by a plurality of cameras provided at different locations;
a resolution setting apparatus which operates together with the encoding apparatus, and sets respective resolutions of image data;
a streaming apparatus which changes items of encoded image data into streams, respectively, the items of encoded image data being those for which the resolutions are set and which are encoded in accordance with the items of captured image data;
a stream selection apparatus which selects one or more streams from a plurality of streams which carry the encoded image data;
a stream synthesis apparatus which synthesizes a selected stream and a stream which carries a control signal into one stream, and outputs a synthesized stream; and
a transmission signal generation apparatus which outputs the synthesized stream as a transmission signal.

2. The transmission signal processing apparatus of claim 1, wherein:
the resolution setting apparatus and the stream selection apparatus are controlled by a portable monitor, and a stream which should be transmitted, a resolution of which is set, is selected;
the portable monitor includes:
a first display logic which displays a first image representing blocks corresponding to monitors which monitor the items of captured image data; and
a second display logic which displays a second image indicating setting information including at least a monitor number of a block selected from among the blocks; and
when the selection is executed, the setting information is configured to be displayed as an arbitrary block within the first image is dragged to an arbitrary block within the second image by a touch operation.

3. The transmission signal processing apparatus of claim 1, wherein the synthesized stream includes image data for stereoscopic display.

4. The transmission signal processing apparatus of claim 1, wherein the camera is one which images an affected part.

5. The transmission signal processing apparatus of claim 1, wherein the resolution setting by the resolution setting apparatus and/or the stream selection by the stream selection apparatus are controlled by a remote control signal.

6. A received signal processing apparatus comprising:
a reception/demodulation device which receives and demodulates a synthesized stream produced by synthesizing a first stream which carries first image data for which a first resolution is set and which is encoded, and a second stream which carries second image data for which the first resolution or a second resolution is set and which is encoded, the first image data and the second image data being items of image data which are acquired by imaging a subject in a same shooting space from different angles;
a separation circuit which separates the first stream from the second stream;
first and second decoders which decode items of image data of the separated first and second streams, and obtain the first image data and the second image data;
a display pattern setting module for outputting the first and second image data to a display such that first and second images produced by the first and second image data are arranged in a display area of the display in a set display pattern; and
a system control apparatus which communicates with a portable monitor in order to select the display pattern from a plurality of patterns, receives an operation signal, and controls the display pattern setting module.

7. The received signal processing apparatus of claim 6, wherein:
the portable monitor comprises a display panel comprising a touch input operation panel;
in the display panel, a plurality of blocks which display images of the first and the second streams are displayed, and a plurality of display areas are set; and
the display pattern is set as an arbitrary block of the plurality of blocks is dragged to an arbitrary display area of the plurality of display areas by a touch operation.

8. The received signal processing apparatus of claim 6, wherein the synthesized stream includes image data for stereoscopic display.

9. The received signal processing apparatus of claim 6, wherein the system control apparatus transmits operation information of the portable monitor to a transmission apparatus which generates the synthesized stream.

10. The received signal processing apparatus of claim 6, wherein the subject in the same shooting space is an affected part.

11. The received signal processing apparatus of claim 6, comprising a control module which receives operation data of the portable monitor, and transmits the operation data to a transmission side which generates the first and second streams.

12. A method of processing a transmission signal in a block which forms a transmission apparatus, the method comprising:
encoding each of items of captured image data captured in a same shooting space by a plurality of cameras provided at different locations;
determining respective resolutions of image data;
changing items of encoded image data for which the resolutions are set and which are encoded into streams, respectively;
selecting one or more streams from a plurality of streams which carry the encoded image data;
synthesizing a selected stream and a stream which carries a control signal into one stream, and outputting a synthesized stream; and
outputting the synthesized stream as a transmission signal.

13. The method of claim 12, wherein:
a portable monitor is used to control a setting apparatus which sets the resolutions and a stream selection apparatus, and to select a stream which should be transmitted, a resolution of which is set; and
in the portable monitor, the method comprises:
displaying a first image representing blocks corresponding to monitors which monitor the items of captured image data;
displaying a second image indicating setting information including at least a monitor number of a block selected from among the blocks; and
displaying the setting information, when the selection is executed, as an arbitrary block within the first image is dragged to an arbitrary block within the second image by a touch operation.
